# EUROPÄISCHE PATENTSCHRIFT

(11) **EP 2 582 765 B1**
(45) Veröffentlichungstag und Bekanntmachung des Hinweises auf die Patenterteilung: **15.10.2014**
(21) Anmeldenummer: 11725771.7
(22) Anmeldetag: 20.06.2011
(51) Int. Cl.: C09J 11/00, C09J 11/06, C08K 5/12

(54) **2-ETHYLHEXYL-METHYL-TEREPHTHALAT ALS WEICHMACHER IN KLEB- UND DICHTSTOFFEN**
2-ETHYLHEXYL METHYL TEREPHTHALATE AS PLASTICISERS IN ADHESIVES OR SEALANTS
2-ÉTHYLHEXYL-MÉTHYL-TÉRÉPHTHALATE EN TANT QUE PLASTIFIANT DANS DES ADHÉSIFS ET DES AGENTS D'ÉTANCHÉITÉ

(30) Priorität: 21.06.2010 EP 10166626
(43) Veröffentlichungstag der Anmeldung: 24.04.2013
(73) Patentinhaber: BASF SE, 67056 Ludwigshafen (DE)
(72) Erfinder: WALTHER, Burkhard, 84518 Garching (DE); AUSTERMANN, Tobias, 48153 Münster (DE); BREITSCHEIDEL, Boris, 67165 Waldsee (DE); WAGNER, Jochen, 66957 Ruppertsweiler (DE)
(86) Internationale Anmeldenummer: PCT/EP2011/060187
(87) Internationale Veröffentlichungsnummer: WO 2011/161037

(56) Entgegenhaltungen:
- WO-A1-2008/027435
- WO-A1-2008/027463
- WO-A1-2010/104534
- WO-A1-2011/054782
- Eastman Chemical Company: "SALES SPECIFICATION N° 23117-2", , 22. Januar 2007 (2007-01-22), XP002660908, Gefunden im Internet: URL:http://www.eastman.com/Supplemental/Un restricted/35/SS-23117.pdf [gefunden am 2011-10-10]
- Eastman Chemical Company: "MSDS (USA English) - SAFETY DATA SHEET", , 24. März 2011 (2011-03-24), Seiten 1-11, XP002660909, Gefunden im Internet: URL:http://www.eastman.com/Products/Pages/ ProductHome.aspx?Product=71045700&list=Che micals [gefunden am 2011-10-10]
- BARRY J ET AL: "ORGANIC SYNTHESES WITHOUT SOLVENT: BASE-CATALYSED ESTER INTERCHANGE", TETRAHEDRON LETTERS, Bd. 29, Nr. 36, 1. Januar 1988 (1988-01-01), XP002042731, ELSEVIER, AMSTERDAM, NL ISSN: 0040-4039, DOI: 10.1016/S0040-4039(00)80548-1

## Beschreibung

Die vorliegende Erfindung betrifft Kleb- und Dichtstoffe gemäß Anspruch 1 auf Basis spezieller Bindemittel enthaltend mindestens 0,32 bis 40 Gew.-% 2-Ethylhexyl-methyl-terephthalat, bezogen auf den gesamten Kleb- oder Dichtstoff. Weiterhin wird ein Verfahren zu deren Herstellung sowie deren Verwendung offenbart.

Kleb- und Dichtstoffe auf Basis von Polyurethanen, Polyharnstoffen, Polyacrylaten, Polysulfiden, silylierten Polyurethanen, silylierten Polyharnstoffen, silylierten Polyethern, silylierten Polysulfiden und silyl-terminierten Acrylaten weisen ein sehr breites Anwendungsspektrum auf und werden in an den jeweiligen Einsatzzweck angepassten Formulierungen eingesetzt, beispielsweise im Hoch- und Tiefbau, in der Flugzeug-oder Fahrzeugindustrie und im Schiffbau. Eine wesentliche Komponente dieser Formulierung sind in der Regel Weichmacher, welche einen Anteil von über 40% der Gesamtformulierung ausmachen können. Bei Weichmachern handelt es sich gemäß DIN 55945 um flüssige und feste indifferente organische Substanzen mit geringem Dampfdruck. Aufgrund ihres Löse- und Quellvermögens verringern sie die Härte des Polymeren, kompatibilisieren das Füllstoff/Polymer-Gemisch und erhöhen die Tieftemperaturelastizität. Insbesondere dienen Weichmacher in Kleb- und Dichtstoffen auch zur Erhöhung der Dehnbarkeit des erzeugten Films.

Kleb- und Dichtstoffe sollen möglichst leicht zu verarbeiten aber auch ausreichend standfest sein, d.h. der eingesetzte Weichmacher soll nach Möglichkeit den Kraftaufwand beim Verarbeiten z.B. beim Ausspritzen des Dichtstoffs aus der Kartusche erniedrigen, gleichzeitig aber die Standfestigkeit nicht nachhaltig verschlechtern. Diese Eigenschaft wird durch den Fließpunkt bestimmt. Außerdem sollen Kleb- und Dichtstoffe nach der Vernetzung ein optimales Verhältnis zwischen Dehnung und Zugfestigkeit erzielen und nach dem Eintrag in die Fuge oder das Substrat optimal zu glätten sein.

Da mit den genannten Verbindungen bzw. Verfahren das grundlegende Problem der Optimierung der Eigenschaften von Kleb- und Dichtstoffen auf Basis von Polyurethanen, Polyharnstoffen, Polyacrylaten, Polysulfiden, silylierten Polyurethanen, silylierten Polyharnstoffen, silylierten Polyethern, silylierten Polysulfiden und silyl-terminierten Acrylaten noch immer nicht endgültig gelöst ist, lag der vorliegenden Erfindung die Aufgabe zugrunde, weitere leicht zu verarbeitende Formulierungen auf Basis dieser Polymere zu entwickeln. Die Kleb- und Dichtstoffe sollten hierbei einen niedrigen Fließpunkt sowie gute mechanische Eigenschaften aufweisen und zudem ein optimales Glättergebnis liefern.

Erfindungsgemäß gelöst wurde die Aufgabe durch Kleb- oder Dichtstoffe gemäß Anspruch 1 enthaltend (A) mindestens eine Verbindung ausgewählt aus der Gruppe der Polyurethane, Polyharnstoffe, Polyacrylate, Polysulfide, silylierten Polyurethane, silylierten Polyharnstoffe, silylierten Polyether, silylierten Polysulfide und silyl-terminierten Acrylate und (B) mindestens 0,32 bis 40 Gew.-% 2-Ethylhexyl-methyl-terephthalat, bezogen auf den gesamten Kleb- oder Dichtstoff.

Überraschend wurde gefunden, dass die erfindungsgemäßen Kleb- und Dichtstoffe, im Vergleich zum Stand der Technik, verbesserte Fließeigenschaften bei gleichbleibenden Zugeigenschaften aufweisen und leicht zu glätten sind.

Unter dem Begriff Kleb- und Dichtstoffe wird jede Zusammensetzung verstanden, durch welche eine Verbindung zwischen zwei oder mehreren Gegenständen oder Körpern hergestellt werden kann oder welche sich zum Verfüllen von Öffnungen, Nahtstellen oder Räumen in, an oder zwischen einem oder mehreren Gegenständen oder Körpern eignen (bspw. Rillen, Löcher, Risse, Fugen, Räume zwischen benachbarten oder überlappenden Gegenständen, Poren und Nähten). So werden Dichtstoffe bspw. für das Verfüllen von Räumen verwendet, welche durch benachbarte oder überlappende Strukturen vorgegeben sind, wie etwa Fenster- und Sanitärfugen oder Fugen im Fahrzeug-, Flugzeug- oder Schiffbau, sowie Hoch-, Tiefbau- und Fußbodenfugen. In speziellen Ausführungsformen können die Dichtstoffe auch dazu verwendet werden, Oberflächen zu glätten oder als Abdichtmasse das Ein- oder Austreten von Feuchtigkeit, Chemikalien oder Gasen durch die genannten Öffnungen, Fugen oder Hohlräume zu verhindern, wobei die vorgenannten Eigenschaften keine notwendigen Merkmale der genannten Kleb- und Dichtstoffe darstellen. Kleb- und Dichtstoffe härten bei oder nach der Anwendung durch chemische oder physikalische Vorgänge einer oder mehrerer Komponenten der Zusammensetzung aus.

In speziellen Ausführungsformen der vorliegenden Erfindung handelt es sich um selbsthärtende Kleb- und Dichtstoffe. Hierunter wird verstanden, dass die Zusammensetzungen nach Applikation härten, ohne dass dabei für den Aushärtungsprozess ein Einwirken von außen notwendig wäre, wie etwa Erwärmen oder Bestrahlen. In weiteren Ausführungsformen kann es sich um Emulsionen eines oder mehrerer Polymere in Wasser oder anderen Lösungsmitteln handeln (bspw. Polyacrylate), welche beim Trocknen auf physikalische Weise aushärten. Weiterhin ist es aber auch möglich, dass die eingesetzten Prepolymere durch die Umgebungsfeuchtigkeit polymerisieren, was bspw. bei den isocyanat-terminierten Polyurethanen oder isocyanat-terminierten Polyharnstoff-Prepolymeren der Fall ist. Bei den erfindungsgemäßen Kleb- und Dichtstoffen kann es sich auch um Zwei- oder Mehrkomponenten-Systeme handeln, welche kurz vor oder während der Applikation miteinander in Kontakt gebracht und/oder miteinander vermischt werden, wobei die so ausgelöste Reaktion zu einer Härtung des Systems führt (bspw. Zweikomponenten-Polyurethan- oder -Polyharnstoff-Systeme).

Bei den erfindungsgemäßen Kleb- oder Dichtstoffe kann es sich somit bevorzugt um ein Einkomponentensystem oder ein Zweikomponentensystem handeln.

Bei denen als Komponente A) eingesetzten Polymeren handelt es sich allgemein um Produkte, welche durch die Polymerisation mindestens eines Monomertyps erhalten wurden. Enthalten die Polymere zwei oder mehr Monomertypen, können diese Monomere in jeder Form im Polymer angeordnet sein, d. h. sie können entweder statistisch verteilt oder in Blöcken vorliegen. Es ist erfindungswesentlich, dass als Komponente (A) mindestens ein Polymer aus der Gruppe der Polyurethane, Polyharnstoffe, Polyacrylate, Polysulfide, silylierten Polyurethane, silylierten Polyharnstoffe, silylierten Polyether, silylierten Polysulfide und silyl-terminierten Acrylate eingesetzt wird.

Die Polyurethane und Polyharnstoffe sind aus mindestens einer Polyol- bzw. Polyamin-Komponente sowie einer Polyisocyanatkomponente aufgebaut und können optional Kettenverlängerer enthalten.

Die Herstellungsweise der Polyurethan- oder Polyharnstoff-Prepolymere ist für die vorliegende Erfindung nicht kritisch. Es kann sich somit um einen einstufigen Prozess handeln, wobei die Polyole und/oder Polyamine, Polyisocyanate und Kettenverlängerer gleichzeitig miteinander zur Reaktion gebracht werden, was bspw. in einer Batch-Reaktion geschehen kann, oder es kann sich um einen zweistufigen Prozess handeln, in dem bspw. zunächst ein Prepolymer gebildet wird, welches im Anschluss mit Kettenverlängerern zur Reaktion gebracht wird.

Die Polyurethane oder Polyharnstoffe können auch noch weitere Struktureinheiten enthalten, insbesondere kann es sich hierbei um Allophanate, Biuret, Uretdion oder Cyanurate handeln. Die vorgenannten Gruppen sind allerdings nur Beispiele, wobei die erfindungsgemäßen Polyurethane und Polyharnstoffe auch weitere Struktureinheiten enthalten können. Auch der Grad der Verzweigung ist für die vorliegende Erfindung unkritisch, so dass sowohl lineare als auch hochverzweigte Polymere eingesetzt werden können.

In einer bevorzugten Ausführungsform der Erfindung beträgt das molare Verhältnis der im Polymer enthaltenen Isocyanat-Komponente zu der Summe der Polyol- bzw. Polyamin-Komponente 0,01 bis 50, bevorzugt 0,5 bis 3,0.

Bei der Isocyanat-Komponente handelt es sich bevorzugt um eine aliphatische, cycloaliphatische, araliphatische und/oder aromatische Verbindung, bevorzugt um ein Diisocyanat oder Triisocyanat, wobei es sich auch um Mischungen dieser Verbindungen handeln kann. Hierbei ist es als bevorzugt anzusehen, dass es sich um Hexamethylendiisocyanat-1,6 (HDI), HDI Uretdion, HDI Isocyanurat, HDI Biuret, HDI Allophanat, 1-Isocyanato-3,3,5-trimethyl-5-isocyanatomethylcyclohexan (IPDI), 2,4- und/oder 2,6-Toluylendiisocyanat (TDI) und/oder 4,4'-, 2,4'- und/oder 2,2'-Diphenylmethandiisocyanat (MDI), Polymeres MDI, Carbodiimid-modifiziertes 4,4'-MDI, m-Xylendiisocyanat (MXDI), m- oder p-Tetramethylxylendiisocyanat (m-TMXDI, p-TMXDI), 4,4'-Dicyclohexylmethandiisocyanat (H12MDI), Naphthalin-1,5-Diisocyanat, Cyclohexan-1,4-diisocyanat, hydriertes Xylylen-diisocyanat (H6XDI), 1-Methyl-2,4-diisocyanato-cyclohexan, Tetramethoxybutan-1,4-diisocyanat, Butan-1,4-diisocyanat, 1,6-Diisocyanato-2,2,4-trimethylhexan, 1,6-Diisocyanato-2,4,4-trimethylhexan, 1-Isocyanato-1-methyl-4(3)-isocyanatomethylcyclohexan (IMCI) sowie 1,12-Dodecandiisocyanat (C12DI) handelt. Weiterhin kann es sich um 4-Dichlorophenyl diisocyanat, Dicyclohexylmethan-4,4'-diisocyanat, m-Phenylendiisocyanat, p-Phenylendiisocyanat, 4-Chloro-1,3-phenylendiisocyanat, 1,6-Hexamethylendiisocyanat, 1,10-Decamethylendiisocyanat, Lysinalkylesterdiisocyanat, 3,3'-Dimethyl-4,4'-diphenylmethandiisocyanat, Xylylendiisocyanat, Tetramethylxylylendiisocyanat, 1,5-Tetrahydronaphthalendiisocyanat, Triisocyanatotoluol, Methylenbis(cyclohexyl)-2,4'-diisocyanat und 4-Methylcyclohexan-1,3-diisocyanat handeln. Insbesondere sind Polyisocyanate mit zwei oder drei Isocyanatgruppen pro Molekül geeignet. Es kann sich aber auch um Mischungen von Polyisocyanaten handeln, wobei die durchschnittliche NCO-Funktionalität der Isocyanatkomponente in der Mischung insbesondere bei 2,1 bis 2,3, 2,2 bis 2,4, 2,6 bis 2,8 oder 2,8 bis 3,0 liegen kann. Derivatisierte Polyisocyanate können ebenfalls verwendet werden, beispielsweise sulfonierte Isocyanate, blockierte Isocyanate, Isocyanurate und Biuret-Isocyanate.

Bei der Polyol- bzw. Polyamin-Komponente handelt es sich bevorzugt um Polyetheresterpolyol, Fettsäureesterpolyole, Polyetherpolyole, Polyesterpolyole, Polybutadienepolyole und Polycarbonatpolyole, wobei es sich auch um Mischungen dieser Verbindungen handeln kann. Die Polyole und/oder Polyamine enthalten bevorzugt zwischen zwei und 10, besonders bevorzugt zwischen zwei und drei Hydroxylgruppen und/oder Aminogruppen und besitzen ein gewichtsmittleres Molekulargewicht zwischen 32 und 30000, besonders bevorzugt zwischen 90 und 18000 g/mol. Als Polyole eignen sich vorzugsweise die bei Raumtemperatur flüssigen, glasartig fest/amorphen oder kristallinen Polyhydroxyverbindungen. Als typische Beispiele wären difunktionelle Polypropylenglykole zu nennen. Es können auch bevorzugt Hydroxylgruppen aufweisende statistische Copolymere und/oder Blockcopolymere des Ethylenoxids und Propylenoxids eingesetzt werden. Geeignete Polyetherpolyole sind die in der Polyurethanchemie an sich bekannten Polyether, wie die unter Verwendung von Startermolekülen hergestellten Polyole mittels KOH- oder DMC- Katalyse aus Styroloxid, Ethylenoxid, Propylenoxid, Butylenoxid, Tetrahydrofuran oder Epichlorhydrin.

Konkret eignen sich insbesondere auch Poly(oxytetramethylen)glykol (Poly-THF), 1,2-Polybutylenglykol, oder deren Mischungen. Insbesondere geeignet sind Polypropylenoxid, Polyethylenoxid und Butylenoxid und deren Mischungen. Ein weiterer als Polyolkomponente einsetzbarer Copolymertyp, der endständig Hydroxylgruppen aufweist, ist gemäß der allgemeinen Formel (herstellbar z.B. mittels "Controlled" High-Speed Anionic Polymerization gemäß Macromolecules 2004, 37, 4038-4043): 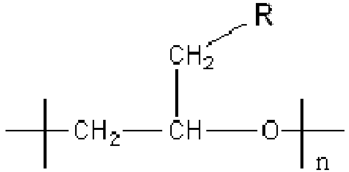 in welcher R gleich oder verschieden ist und bevorzugt durch OMe, OiPr, Cl oder Br repräsentiert wird.

Weiterhin eignen sich als Polyol-Komponente insbesondere die bei 25°C flüssigen, glasartig amorphen oder kristallinen Polyesterdi- bzw. polyole, die durch Kondensation von Di- oder Tricarbonsäuren, wie Adipinsäure, Sebacinsäure, Glutarsäure, Azelainsäure, Korksäure, Undecandisäure, Dodecandisäure, 3,3-Dimethylglutarsäure, Terephthalsäure, Isophthalsäure, Hexahydrophthalsäure und/oder Dimerfettsäure, mit niedermolekularen Diolen, Triolen oder Polyolen, wie Ethylenglykol, Propylenglykol, Diethylenglykol, Triethylenglykol, Dipropylenglykol, 1,4-Butandiol, 1,6-Hexandiol, 1,8-Octandiol, 1,10-Decandiol, 1,12-Dodecandiol, Dimerfettalkohol, Glycerin, Pentaerythritol und/ oder Trimethylolpropan, herstellbar sind.

Eine weitere geeignete Gruppe der Polyole sind die Polyester z.B. auf der Basis von Caprolacton, welche auch als "Polycaprolactone" bezeichnet werden. Weitere einsetzbare Polyole sind Polycarbonat-Polyole, Dimerfettalkohole und Dimerdiole sowie Polyole auf Basis pflanzlicher Öle und ihrer Derivate, wie Rizinusöl und dessen Derivate oder epoxidiertes Sojabohnenöl. Außerdem kommen Hydroxylgruppen aufweisende Polycarbonate in Frage, welche durch Reaktion von Kohlensäurederivaten, z. B. Diphenylcarbonat, Dimethylcarbonat oder Phosgen, mit Diolen erhältlich sind. Besonders eignen sich z.B. Ethylenglykol, 1,2- und 1,3-Propandiol, 1,3- und 1,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenol A, Tetrabrombisphenol A, Glyzerin, Trimethylolpropan, 1,2,6-Hexantriol, 1,2,4-Butantriol, Trimethylolpropan, Pentaerythrit, Chinit, Mannit, Sorbit, Methylglykosid und 1,3,4,6-Dianhydrohexite. Auch die Hydroxyfunktionellen Polybutadiene, welche u.a. unter dem Handelsnamen "Poly-bd®" käuflich sind, können als Polyol-Komponente ebenso wie deren hydrierten Analoga dienen. Weiterhin kommen Hydroxy-funktionelle Polysulfide, welche unter dem Handelsnamen "Thiokol® NPS-282" vertrieben werden, sowie hydroxy-funktionelle Polysiloxane in Frage.

Als erfindungsgemäß einsetzbare Polyamin-Komponente eignen sich insbesondere Hydrazin, Hydrazinhydrat und substituierte Hydrazine, wie N-Methylhydrazin, N,N'-Dimethylhydrazin, Säurehydrazide der Adipinsäure, Methyladipinsäure, Sebacinsäure, Hydracrylsäure, Terephthalsäure, Isophthalsäure, Semicarbazidoalkylen-hydrazide, wie 13-Semicarbazidopropionsäurehydrazid, Semicarbazidoalkylen-carbazinester, wie z. B. 2-Semicarbazidoethyl-carbazinester und/ oder Aminosemicarbazid-Verbindungen, wie 13-Aminoethylsemicarbazidocarbonat. Weiterhin eignen sich zur Herstellung der Polyurethane und Polyharnstoffe Polyamine basierend auf Polyestern, Polyolefinen, Polyacetalen, Polythioethern, Polyethercarbonaten, Polyethyleneterephthalaten, Polyesteramiden, Polycaprolactamen, Polycarbonaten, Polycaprolactonen und Polyacrylaten, welche mindestens zwei Amingruppen aufweisen. Polyamine, z.B. solche, die unter dem Handelsnamen Jeffamine® (es handelt sich um Polyetherpolyamine) vertrieben werden, sind auch geeignet.

Als Polyol-Komponente und/oder Polyamin-Komponente kommen auch die als sogenannte Kettenverlänger bekannten Spezies in Frage, welche bei der Herstellung von Polyurethanen und Polyharnstoffen mit überschüssigen Isocyanatgruppen reagieren, normalerweise ein Molekulargewicht (Mn) von unter 400 aufweisen und häufig in Form von Polyolen, Aminopolyolen oder aliphatischen, cycloaliphatischen oder araliphatischen Polyaminen vorliegen.

Geeignete Kettenverlängerer sind beispielsweise:
- Alkandiole, wie Ethandiol, 1,2- und 1,3-Propandiol, 1,4- und 2,3-Butandiol, 1,5-Pentandiol, 1,3-Dimethylpropandiol, 1,6-Hexandiol, Neopentylglykol, Cyclohexandimethanol, 2-Methyl-1,3-propandiol, Hexylenglykol, 2,5-Dimethyl-2,5-hexandiol, Ethylenglycol, 1,2- oder 1,3-Propandiol, 1,2-, 1,3- oder 1,4-Butanediol, 1,2-, 1,3-, 1,4- oder 1,5-Pentanediol, 1,2-, 1,3-, 1,4-, 1,5- or 1,6-Hexandiol, Neopentylhydroxypivalat, Neopentylglycol, Dipropyleneglycol, Diethylenglycol, 1,2-, 1,3- oder 1,4-Cyclohexandiol, 1,2-, 1,3- oder 1,4-Cyclohexandimethanol, Trimethylpentandiol, Ethylbutylpropandiol, Diethyloctandiole, 2-Butyl-2-ethyl-1,3-propandiol, 2-Butyl-2-methyl-1,3-propandiol, 2-Phenyl-2-methyl-1,3-propandiol, 2-Propyl-2-ethyl-1,3-propanediol, 2-Di-tert-butyl-1,3-propandiol, 2-Butyl-2-propyl-1,3-propandiol, 1-Dihydroxymethylbicyclo[2.2.1]heptan, 2,2-Diethyl-1,3-propanediol, 2,2-Dipropyl-1,3-propandiol, 2-Cyclohexyl-2-methyl-1,3-propandiol, 2,5-Dimethyl-2,5-hexanediol, 2,5-Diethyl-2,5-hexandiol, 2-Ethyl-5-methyl-2,5-hexanediol, 2,4-Dimethyl-2,4-pentandiol, 2,3-Dimethyl-2,3-butandiol, 1,4-Bis(2'-hydroxypropyl)benzol, und 1,3-Bis(2'-hydroxypropyl)benzol und
- δ-Hydroxybutyl-ε-hydroxy-capronsäureester, ω-Hydroxyhexyl-γ-hydroxy-buttersäureester, Adipinsäure-(β-hydroxyethyl)-ester oder Terephthalsäure-bis-(β-hydroxyethyl)-ester und
- Aliphatische Diamine, aromatische Diamine und alicyclische Diamine, insbesondere Methylenediamin, Ethylendiamin, 1,2- und 1,3-Diaminopropan, 1,4-Diaminobutan, Cadaverin (1,5-Diaminopentan), 1,6-Hexamethylendiamin, Isophorondiamin, Piperazin, 1,4-Cyclohexyldimethylamin, 4,4'-Diaminodicyclohexylmethan, Aminoethylethanolamin, 2,2,4-Trimethylhexamethylendiamin, 2,4,4-Trimethylhexamethylendiamin, Octamethylendiamin, m- or p-Phenylendiamin, 1,3- oder 1,4-Xylylendiamin, hydriertes Xylylendiamin, Bis(4-aminocyclohexyl)methan, 4,4'-Methylen-bis-(ortho-chloroanilin), Di-(methylthio)-toluoldiamin, Diethyltoluoldiamin, N,N'-Dibutylamindiphenylmethan, Bis-(4-amino-3-methylcyclohexyl)methan, Isomerengemische von 2,2,4- und 2,4,4-Trimethyl-hexamethylendiamin, 2-Methylpentamethylendiamin, Diethylentriamin, und 4,4- Diaminodicyclohexylmethan sowie
- Ethanolamin, Hydrazinethanol, 2-[(2-Aminoethyl)amino]ethanol.

Schließlich soll erwähnt sein, dass die Polyol-Komponente und/oder Polyamin-Komponente Doppelbindungen enthalten können, welche z.B. aus langkettigen, aliphatischen Carbonsäuren oder Fettalkoholen resultieren können. Eine Funktionalisierung mit olefinischen Doppelbindungen ist z. B. auch durch den Einbau vinylischer und/oder allylischer Gruppen möglich, welche ggf. alkyl-, aryl- und /oder aralkyl-substituiert sind, sowie ungesättigten Säuren wie Maleinsäureanhydrid, Acrylsäure oder Methacrylsäure sowie deren jeweiligen Estern stammen.

Bevorzugt im Sinne der Erfindung ist es, dass es sich bei der Polyol-Komponente und/oder Polyamin-Komponente um Polypropylendiol, Polypropylentriol, Polypropylenpolyol, Polyethylendiol, Polyethylentriol, Polyethylenpolyol, Polypropylendiamin, Polypropylentriamin, Polypropylenpolyamin, Poly-THF-diamin, Polybutadiendiol, Polyesterdiol, Polyestertriol, Polyesterpolyol, Polyesteretherdiol, Polyesterethertriol, Polyesteretherpolyol, besonders bevorzugt Polypropylendiol, Polypropylentriol, Poly-THF-diol, Polyhexandiolcarbamatdiol, Polycaprolactamdiol und Polycaprolactamtriol handelt. Weiterhin kann es sich auch um Mischungen der genannten Verbindungen handeln.

In einer besonders bevorzugten Ausführungsform enthalten die Polyurethane oder Polyharnstoffe Polyole mit einem Molekulargewicht zwischen 1000 und 10000, insbesondere 2000 bis 6000 und besonders bevorzugt 3000 bis 5000 g/mol. Bei diesen Polyolen handelt es sich besonders bevorzugt um Poly-THF-diol, Polypropylenglycol sowie statistische Copolymere und/oder Blockcopolymere des Ethylenoxids und Propylenoxids. Insbesondere kann es sich um Polyetherpolyole handeln, welche in einer bevorzugten Ausführungsform durch DMC Katalyse und in einer besonders bevorzugt Ausführungsform durch KOH-Katalyse hergestellt wurden. In einer bevorzugten Ausführungsform werden als Kettenverlängerer Diole mit einem Molekulargewicht von 60 bis 500, insbesondere 60 bis 180 eingesetzt, wobei die Dioligomere von Glycolen besonders bevorzugt sind. Hinsichtlich der erfindungsgemäßen Eigenschaftenen der Klebund Dichtstoffe ist es weiterhin besonders vorteilhaft, wenn die Polyurethane oder Polyharnstoffe 2,4- und/oder 2,6-Toluylendiisocyanat (TDI) und/oder 4,4'-, 2,4'- und/oder 2,2'-Diphenylmethandiisocyanat (MDI) und oder 1-Isocyanato-3,3,5-trimethyl-5-isocyanatomethylcyclohexan (IPDI) enthalten, insbesondere Isomerengemische des TDI, wobei ein 2,4-Isomerenanteil von über 40% besonders bevorzugt ist.

Die Polyurethane oder Polyharnstoffe der vorliegenden Erfindung können auch Vernetzer-Komponenten, Kettenstopper-Komponenten und weitere reaktive Komponenten enthalten. Einige Vernetzer wurden bereits unter den Kettenverlängerern mit mindestens drei gegenüber NCO reaktiven Wasserstoffen aufgeführt. Insbesondere kann es sich um Glycerin, Tetra(2-hydroxypropyl)ethylenediamine, Pentaerythritol, Trimethylolpropen, Sorbitol, Sucrose, Triethanolamin und Polymere mit mindestens drei reaktiven Wasserstoffen handeln (z.B. Polyetheramine mit mindestens drei Amingruppen, polymere Triole usw.). Als Kettenstopper kommen insbesondere Verbindungen mit reaktiven Wasserstoffen in Frage, wie Monoole, Monoamine, Monothiole und Monocarbonsäuren. In einer speziellen Ausführungsform werden Monoole eingesetzt, wobei C₁- bis C₁₂-Alkohole (insbesondere Methanol bis Dodecylalkohol), höhere Alkohole, Polymere wie etwa Polyether und Polyester mit einer OH-Gruppe und Struktureinheiten wie Glycerin oder Saccharose, in denen alle bis auf eine OH- Gruppe umgesetzt wurden, wobei bei der Umsetzung keine weiteren reaktiven Wasserstoffe eingeführt wurden.

In einer besonders UV beständigen Variante werden als Polyolkomponente bevorzugt Polyester mit mindestens zwei OH-Gruppen, Polycarbonate mit mindestens zwei OH-Gruppen, Polycarbonatester mit mindestens zwei OH-Gruppen, PolyTHF, Polypropylenglykol, statistische Copolymere und/oder Blockcopolymere des Ethylenoxids und Propylenoxids eingesetzt.

Kleb- und Dichtstoffe enthaltende Polyurethane können weiterhin stabilisierende Additive, z.B. zum Schutz vor UV-Strahlung, Oxidation enthalten, insbesondere werden Additive vom Hals-Typ verwendet. Beispielhaft sei das 4-Amino-2,2,6,6-tetramethylpiperidin genannt.

Für die Polyurethane und Polyharnstoffe können als latente Härter Oxazolidine, insbesondere Oxazolidine aus Diethanolamin und Isobutylaldehyd oder Pivalaldehyd und/ oder Aldemine aus Isophorondiamin, z.B. Incozol HP und Imine z.B. Vestamin A139, niedermolekularen aliphatischen Diaminen z.B. Hexandiamin und/oder Polyetherpolyamine wie z.B. Jeffamine^{®} und Isobutyraldehyd oder Pivalaldehyd und/oder ein Polyamin wie z.B. Hexamethylendiamin oder ein Jeffamin^{®} blockiert mit einem Hydroxypivalaldehydester eingesetzt werden.

In einer bevorzugten Ausführungsform enthält der erfindungsgemäße Kleb- oder Dichtstoff Polyurethane oder Polyharnstoffe, welche freie Isocyanat-Gruppen aufweisen. Insbesondere handelt es sich hierbei um isocyanat-terminierte Prepolymere. Die Isocyanat-Gruppen können mit Wasser reagieren (einschließlich Feuchtigkeit aus der Atmosphäre), wobei Amin-Gruppen gebildet werden, welche mit den Isocyanat-Gruppen der anderen Polyurethan- oder Polyharnstoff-Moleküle reagieren und hierbei Harnstoff-Verknüpfungen ausbilden, wodurch der Kleb- oder Dichtstoff aushärtet.

In einer weiteren Ausführungsform werden Polyharnstoff- oder Polyurethan-Kleb- und Dichtstoffe als Zweikomponenten-System ausgeführt. Die erste Komponente kann ein Polyisocyanat und/oder NCO-Prepolymer und die zweite Komponente ein Polyol, Polyamin und/oder einen Kettenverlängerer enthalten. Nach dem Vermischen der beiden Komponenten reagieren diese beiden Bestandteile miteinander, wodurch der Kleb-oder Dichtstoff aushärtet.

In einer weiteren erfindungsgemäßen Ausführungsform werden Polyurethan-Prepolymere und Polyharnstoff-Prepolymere mit mindestens einer geeigneten funktionalisierten polymerisierbaren Verbindung enthaltend Doppelbindung umgesetzt, wie z.B. Hydroxyethylmethacrylat, Hydroxyethylacrylat, Hydroxypropylmethacrylat, Hydroxypropylacrylat, 4-Hydroxybutylvinylether und Isoprenol.

Die silylierten Polyurethane und silylierten Polyharnstoffe sind aus mindestens einer Polyol- bzw. Polyamin-Komponente, aus mindestens einer Polyisocyanat-Komponente und aus mindestens einer Silylierungsmittel-Komponente aufgebaut.

Als bevorzugte Polyol- bzw. Polyamin-Komponente, sowie Polyisocyanat-Komponente sind alle für die bereits beschriebene Herstellung der Polyurethane und Polyharnstoffe genannten Verbindungen geeignet. Bezüglich der enthaltenen Silylierungsmittel-Komponente eignen sich
1. primäre und/oder sekundäre Aminosilane; α oder γ Stellung z. B.

   H₂N-CH₂-Si(OR²)₃

   H₂N-(CH₂)₃-Si(OR²)₃

   R'NH-(CH₂)₃-Si(OR²)₃

   R'NH-CH₂-CHMe-CH₂-Si(OR²)₃

   wobei OR² unabhängig voneinander repräsentiert wird durch eine Alkoxygruppe, wobei R² eine Alkylgruppe mit ein bis 5 Kohlenstoffatomen darstellt, z.B. Methyl, Ethyl, iso-Propyl, n-Propyl, n-Butyl, iso-Butyl, sec.-Butyl und/oder OR² eine Phenoxygruppe, eine Naphthyloxygruppe, eine Phenoxygruppe, welche an der ortho-, metha- und/oder para-Position substituiert ist, mit einer C₁-C₂₀ Alkyl-, Alkylaryl-, Alkoxy-, Phenyl-, substituierten Phenyl-, Thioalkyl-, Nitro-, Halogen-, Nitril-, Carboxyalkyl-, Carboxyamid-, -NH₂ und/oder NHR-Gruppe, worin R eine lineare, verzweigte oder zyklische C₁-C₂₀ Alkylgruppe z.B. Methyl, Ethyl, Propyl (n, iso), Butyl (n, iso, sec) oder Cyclohexyl oder Phenyl darstellt wobei R' eine lineare, verzweigte oder zyklische C₁-C₂₀ Alkylgruppe z.B. Methyl, Ethyl, Propyl (n, iso), Butyl (n, iso, sec) oder Cyclohexyl oder Phenyl darstellt,
2. Isocyanatosilane; α oder γ Stellung
3. Produkte erhalten durch Michael Addition primärer Aminosilane in α- und γStellung und Ringschluss zum Hydantoin, z.B. US 5364955.

Silylierungsmittel-Komponenten werden in den Patentanmeldungen WO2006/088839 A2 und WO 2008/061651 A1 sowie in der Patentschrift EP 1 685171 B1 beschrieben.

Die im silylierten Polyurethan bzw. dem silylierten Polyharnstoff enthaltenen Silylierungsmittel-Komponenten, welche im Sinne der vorliegenden Erfindung bevorzugt sind, sind insbesondere Silane der allgemeinen Formel:

Y-R¹-Si(Me)ₙ(OR²)₃₋ₙ

wobei Y repräsentiert wird durch -NCO, -NHR, -NH₂ oder -SH,
R repräsentiert wird durch eine Alkylgruppe oder Arylgruppe mit ein bis 20 Kohlenstoffatomen, z.B. Methyl-, Ethyl-, iso-Propyl-, n-Propyl, Butylgruppe (n-, iso-, sec-), Cyclohexyl, Phenyl und Naphthyl,
R¹ repräsentiert wird durch eine divalente Kohlenwasserstoffeinheit mit ein bis 10 Kohlenstoffatomen, z.B. Ethylen, Methylethylen,
Me repräsentiert wird durch Methyl,
OR² unabhängig voneinander repräsentiert wird durch eine Alkoxygruppe, wobei R² eine Alkylgruppe mit ein bis 5 Kohlenstoffatomen darstellt, z.B. Methyl, Ethyl, iso-Propyl, n-Propyl, n-Butyl, iso.Butyl, sec.-Butyl und/oder OR² eine Phenoxygruppe, eine Naphtyloxygruppe, eine Phenoxygruppe, welche an der ortho-, metha- und/oder para-Position substituiert ist, mit einer C₁-C₂₀ Alkyl-, Alkylaryl-, Alkoxy-, Phenyl-, substituierten Phenyl-, Thioalkyl-, Nitro-, Halogen-, Nitril-, Carboxyalkyl-, Carboxyamid-, -NH₂ und/oder NHR-Gruppe, worin R eine lineare, verzweigte oder zyklische C₁-C₂₀ Alkylgruppe, z.B. Methyl, Ethyl, Propyl (n-, iso.), Butyl (n-, iso-, sec.-) oder Phenyl darstellt und
n repräsentiert wird durch 0, 1, 2 oder 3.

Als Silylierungsmittel-Komponente können aber auch Mischungen aus mindestens zwei der genannten Verbindungen im Polymer vorhanden sein.

In einer bevorzugten Ausführungsform sind als Silylierungsmittel-Komponente insbesondere Aminogruppen oder Isocyanatgruppen enthaltende Alkoxysilane von Interesse. Als Aminogruppen enthaltende Alkoxysilane sind insbesondere Verbindungen geeignet, welche ausgewählt sind aus der Gruppe 3-Aminopropyl-trimethoxysilan, 3-Aminopropyl-triethoxysilan, 3-Aminopropyl-methyldimethoxysilan, 3-Aminopropyl-methyldiethoxysilan, 3-Amino-2-methylpropyl-trimethoxysilan, 4-Aminobutyl-trimethoxysilan, 4-Aminobutyl-methyldimethoxysilan, 4-Amino-3-methylbutyl-trimethoxysilan, 4-Amino-3,3-dimethylbutyl-trimethoxysilan, 4- Amino-3,3-dimethylbutyl-dimethoxymethylsilan, Aminomethyl-trimethoxysilan, Aminomethyl-dimethoxymethylsilan, Aminomethylmethoxydimethylsilan, Aminomethyl-triethoxysilan, Aminomethyl-diethoxymethylsilan, Aminomethyl-ethoxydimethylsilan, N-Methyl-3-aminopropyl-trimethoxysilan, N-Methyl-3-aminopropyl-dimethoxymethylsilan, N-Ethyl-3-aminopropyl-trimethoxysilan, N-Ethyl-3-aminopropyl-dimethoxymethylsilan, N-Butyl-3- aminopropyl-trimethoxysilan, N-Butyl-3-aminopropyl-dimethoxymethylsilan, N-Cyclohexyl-3-aminopropyl-trimethoxysilan, N-Cyclohexylaminomethyltriethoxysilan, Cyclohexylaminomethyltrimethoxysilan, N- Phenyl-3-aminopropyl-trimethoxysilan, N-Methyl-3-amino-2-methylpropyl-tri- methoxysilan, N-Methyl-3-amino-2-methylpropyl-di-methoxymethylsilan, N-Ethyl-3-amino-2-methylpropyl-trimethoxysilan, N-Ethyl-3-amino-2-methylpropyl-dimethoxymethylsilan, N-Ethyl-3-aminopropyl-dimethoxy-methylsilan, N-Ethyl-3-aminopropyl-trimethoxysilan, N-Phenyl-4-aminobutyl-trimethoxysilan, N- Phenyl-aminomethyl-dimethoxymethylsilan, N-Phenyl-aminomethyl-trimethoxysilan, N-Cyclohexyl-aminomethyl-di-methoxymethylsilan, N-Cyclohexyl-aminomethyl-tri-methoxysilan, N-Methyl-aminomethyl-dimethoxymethylsilan, N-Methyl-aminomethyl-trimethoxysilan, N-Ethyl-aminomethyl-dimethoxymethylsilan, N-Ethyl-aminomethyl-trimethoxysilan, N-Propyl-aminomethyl-dimethoxymethylsilan, N-Propyl-aminomethyl-trimethoxysilan, N-Butyl-aminomethyl-dimethoxymethylsilan, N-Butyl-aminomethyl-trimethoxysilan, N-(2-Aminoethyl)-3-amino-propyltrimethoxysilan, N-(2-Aminoethyl)-3-amino-propyl-methyldimethoxysilan, 3-[2-(2-Aminoethylamino)-ethylamino]-propyl-trimethoxysilan, Bis(trimethoxysilylpropyl)amin, Bis-(dimethoxy(methyl)silylpropyl)amin, Bis(trimethoxysilylmethyl)amin, Bis(dimethoxy(methyl)silylmethyl)amin, 3-Ureidopropyltrimethoxysilan, N-Methyl[3-(Trimethoxysilyl)-propyl]carbamate, N-Trimethoxysilylmethyl-O-methylcarbamat, N-Dimethoxy(methyl)silyl-methyl-carbamat sowie deren Analoga mit Ethoxy- oder Isopropoxygruppen oder n-Propoxygruppen oder n-Butoxygruppen oder iso Butoxygruppen oder sec.-Butoxygruppen anstelle der Methoxygruppen am Silicium.

Als Isocyanatgruppen enthaltende Alkoxysilane sind insbesondere Verbindungen geeignet, welche ausgewählt sind aus der Gruppe bestehend aus Isocyanatopropyltriethoxysilan, Isocyanatopropyltrimethoxysilan, Isocyanatopropylmethyldiethoxysilan, Isocyanatopropylmethyldimethoxysilan, Isocyanatomethyltrimethoxysilan, Isocyanatomethyltriethoxysilan, Isocyanatomethylmethyldiethoxysilan, Isocyanatomethylmethyldimethoxysilan, Isocyanatomethyldimethylmethoxysilan oder Isocyanatomethyldimethylethoxysilan, sowie deren Analoga mit Isopropoxy- oder n-Propoxygruppen.

Bevorzugt zu verwendende silylierte Polyurethane und deren Herstellung werden in den Patentanmeldungen US 3,632,557, US 5,364,955, WO 01/16201, EP 931800, EP 1093482 B1, US 2004 260037, US 2007167598, US 2005119421, US 4857623, EP 1245601, WO 2004/ 060953, DE 2307794 beschrieben.

Unter den erfindungsgemäß einsetzbaren Acrylaten sind Verbindungen zu verstehen, welche mindestens ein Monomer aus der Reihe der Acrylsäureester und Methacrylsäureester enthalten, wobei bevorzugt mindestens 70 Gew.-% des Polymers aus mindestens einer Verbindung der Reihe der Acrylsäureester, Methacrylsäureester und Styrole besteht.

Bei den Monomeren der Acrylat-Komponente handelt es sich bevorzugt um mindestens eine Verbindung aus der Reihe Ethyldiglycolacrylat, 4-tert. Butylcyclohexylacrylat, Dihydrocyclopentadienylacrylat, Lauryl(meth)acrylat, Phenoxyethyl(meth)acrylat, Iso-bornyl(meth)acrylat, Dimethylaminoethyl(meth)acrylat, Cyanoacrylate, Citraconat, Itaconat und deren Derivate, (Meth)acrylsäure, Methyl(meth)acrylat, Ethyl(meth)acrylat, n-Propyl(meth)acrylat, Isopropyl(meth)acrylat, n-Butyl(meth)acrylat, Isobutyl(meth)-acrylat, tert-Butyl(meth)acrylat, n-Pentyl(meth)acrylat, n-Hexyl(meth)acrylat, Cyclohexyl(meth)acrylat, n-Heptyl(meth)acrylat, n-Octyl(meth)acrylat, 2-Propylheptyl(meth)-acrylat, 2-Ethylhexyl(meth)acrylat, Nonyl(meth)acrylat, Decyl(meth)acrylat, iso Decyl(meth)acrylat, Dodecyl(meth)acrylat, Phenyl(meth)acrylat, Toluyl(meth)acrylat, Benzyl(meth)acrylat, 2-Methoxyethyl(meth)acrylat, 3-Methoxybutyl(meth)acrylat, 2-Hydroxyethyl(meth)acrylat, 2-Hydroxypropyl(meth)acrylat, Stearyl(meth)acrylat, Glycidyl(meth)acrylat, 2-Aminoethyl(meth)acrylate, γ-(Methacryloyloxypropyl)trimethoxysilan, Ethyleneoxid Addukte von (Meth)acrylsäure, Trifluoromethylmethyl(meth)acrylat, 2-Trifluoromethylethyl(meth)acrylat, 2-Perfluoroethylethyl(meth)acrylat, 2-Perfluoroethyl-2-perfluorobutylethyl(meth)acrylat, 2-Perfluoroethyl(meth)acrylat, Perfluoromethyl-(meth)acrylat, Diperfluoromethylmethyl(meth)acrylat, 2-Perfluoromethyl-2-perfluoroethylmethyl(meth)acrylat, 2-Perfluorohexylethyl(meth)acrylat, 2-Perfluorodecylethyl-(meth)acrylat und 2-Perfluorohexadecylethyl(meth)acrylat.

In einer besonderen Ausführungsform handelt es sich um zwei oder mehrere Monomere aus der Reihe n-Butyl(meth)acrylat, 2-Hydroxyethyl(meth)acrylat, Acrylsäure, Methacrylsäure und Methylmethacrylat.

In einer weiteren Ausführungsform werden Copolymere aus mindestens zwei aller vorgenannten Monomere eingesetzt, wobei das Verhältnis in der Form gewählt wird, dass die erhaltenen Copolymere die gewünschten anwendungstechnischen Eigenschaften für Kleb- und Dichtstoffe aufweisen. Dem Fachmann sind geeignete Copolymere mit den gewünschten anwendungstechnischen Eigenschaften bekannt. Insbesondere sind Copolymere aus n-Butylacrylat und Methylmethacrylat bevorzugt, welche in einem molaren Verhältnis eingesetzt werden in denen das erhaltene Copolymer eine Glasübergangstemperatur besitzt, welche zwischen denen der entsprechenden Homopolymere liegt. Insgesamt kann es sich bei den Acrylaten der vorliegenden Erfindung sowohl um Copolymer als auch um Homopolymere handeln.

Die Acrylsäure-Polymere können weiterhin auch andere ethylenisch ungesättigte Monomere enthalten, z.B. Isoprenol oder Hydroxybutylvinylether. Als Beispiele seien hier mono- und polyungesättigte Kohlenwasserstoffmonomere, Vinylester (bspw. Vinylester von C₁- bis C₆-gesättigten Monocarbonsäuren), Vinylether, monoethylenisch ungesättigte Mono- und Polycarbonsäuren und Alkylester dieser Mono- und Polycarbonsäuren (bspw. Acrylsäureester und Methacrylsäureester wie etwa C₁- bis C₁₂-Alkyl und insbesondere C₁- bis C₄-Alkylester), Aminomonomere und Nitrile, Vinyl- und Alkylvinylidene und Amide von ungesättigten Carbonsäuren genannt. Weiterhin kommen ungesättigte Kohlenwasserstoff-Monomere umfassend Styrol-Verbindungen (bspw. Styrol, carboxyliertes Styrol und alpha-Methylstyrol), Ethylen, Propylen, Butylen und konjugierte Diene (Butadien, Isopren und Copolymere von Butadien und Isopren) in Frage. Bezüglich der Vinyl- und Halogenvinylidenmonomere seien Vinylchlorid, Vinylidenchlorid, Vinylfluorid und Vinylidenfluorid genannt. Beispiele für die Vinylester umfassen aliphatische Vinylester, wie etwa Vinylformat, Vinylacetat, Vinylpropionat, Vinylbutyrat, Vinylisobutyrat, Vinylvaleriat, Vinylcaproat und Allylester der gesättigten Monocarbonsäuren wie Allylacetat, Allylpropionat und Allyllactat. Hinsichtlich der Vinylether seien Methylvinylether, Ethylvinylether und N-Butylvinylether genannt. Typische Vinylketone umfassen Methylvinylketone, Ethylvinylketone und Isobutylvinylketone. Beispiele für die Dialkylester der monoethylenisch ungesättigten Dicarbonsäuren sind Dimethylmaleat, Diethylmaleat, Dibutylmaleat, Dioctylmaleat, Diisooctylmaleat, Dinonylmaleat, Diisodecylmaleat, Ditridecylmaleat, Dimethylfumarat, Diethylfumarat, Dipropylfumarat, Dibutylfumarat, Dioctylfumarat, Diisooctylfumarat, Didecylfumarat, Dimethylitaconat, Diethylitaconat, Dibutylitaconat und Dioctylitaconat. Insbesondere handelt es sich bei den monoethylenisch ungesättigten Monocarbonsäuren um Acrylsäure, Methacrylsäure, Ethacrylsäure und Crotonsäure. Bei den monoethylenisch ungesättigten Dicarbonsäuren seien Maleinsäure, Fumarsäure, Itaconsäure und Citronensäure genannt. Als monoethylenisch ungesättigte Tricarbonsäuren können im Hinblick auf die vorliegende Erfindung bspw. Aconitsäure und deren halogensubstituierte Derivate eingesetzt werden. Des Weiteren können die Anhydride und Ester der vorgenannten Säuren (bspw. Maleinsäureanhydrid und Citronensäureanhydrid) eingesetzt werden. Beispiele für Nitrile von ethylenisch ungesättigten Mono-, Di- und Tricarbonsäuren umfassen Acrylonitril, α-Chloracrylonitril und Methacrylonitril. Bei den Amiden der Carbonsäuren kann es sich um Acrylamide, Methacrylamide und andere α-substituierte Acrylamide und N-substituierte Amide bspw. N-Methylolacrylamid, N-Methylolmethylacrylamid, alkylierte N-Methylolacrylamide und N-Methylolmethacrylamide (bspw. N-Methoxymethylacrylamid und N-Methoxymethylmethacrylamid) handeln. Als Aminomonomere können substituierte und unsubstituierte Aminoalkylacrylate, Hydrochloridsalze der Aminomonomere und Methacrylate wie etwa β-Aminoethylacrylat, β-Aminoethylmethacrylat, Dimethylaminomethylacrylat, β-Methylaminoethylacrylat und Dimethylaminomethylmethacrylat eingesetzt werden. Im Rahmen der vorliegenden Erfindung seien hinsichtlich der kationischen Monomere α- und β-ethylenisch ungesättigte Verbindungen genannt, welche sich zur Polymerisation eignen und primäre, sekundäre oder tertiäre Aminogruppen enthalten, bspw. Dimethylaminoethylmethacrylat, Dimethylaminoneopentylacrylat, Dimethylaminopropylmethacrylat und tert.-Butylaminoethylmethacrylat oder organische und anorganische Salze dieser Verbindungen und/oder Alkylammonium-Verbindungen wie etwa Trimethylammoniumethylmethacrylatchlorid, Diallyldimethylammoniumchlorid, β-Acetamidodiethylaminoethylacrylatchlorid und Methaacrylamidopropyltrimethylammoniumchlorid. Diese kationischen Monomere können alleine oder in Kombination mit den vorgenannten weiteren Monomeren eingesetzt werden. Als Beispiele für hydroxy-haltige Monomere seien noch die β-Hydroxyethl(meth)acrylate, β-Hydroxypropyl(meth)acrylate, γ-Hydroxypropyl(meth)acrylate und genannt.

Die erfindungsgemäß einsetzbaren silyl-terminierten Acrylate sind aus mindestens einer Acrylat-Komponente und mindestens einer Silyl-Komponente aufgebaut. Die silyl-terminierten Acrylate können beispielsweise aus der Umsetzung von alkenyl-terminierten Acrylaten durch Hydrosilylierung erhalten werden, wobei die alkenyl-terminierten Acrylate über Atom Transfer Radical Polymerization (ATRP) hergestellt werden können oder aus der Umsetzung von alkenyl-terminierten Acrylaten mit einem Silylgruppen enthaltenden Monomer, wobei die alkenyl-terminierten Acrylate über Atom Transfer Radical Polymerization (ATRP) hergestellt werden können.

Als Monomere für den Aufbau der Acrylat-Komponente sind alle für die bereits beschriebene Herstellung der Polyacrylate genannten Verbindungen geeignet.

Wird die Silyl-Komponente durch Hydrosilylierung an die Acrylat-Komponente gebunden, so eignen sich als Silyl-Komponente insbesondere Trimethylchlorsilan, Dimethyldichlorsilan, Methyltrichlorsilan, Hexamethyldisilazan, Trichlorsilan, Methyldichlorsilan, Dimethylchlorosilan, Phenyldichlorosilan sowie Trimethoxysilan, Triethoxysilan, Methyldiethoxysilan, Methyldimethoxysilan und Phenyldimethoxysilan sowie Methyldiacetoxysilan, Phenyldiacetoxysilan, Bis(dimethylketoxymat)methylsilan und Bis(cyclohexylketoxymat)methylsilan. Hierbei sind insbesondere die Halosilane und Alkoxylsilane bevorzugt.

Wird die Silyl-Komponente durch ein Silylgruppen enthaltendes Monomer an die Acrylat-Komponente gebunden, so eignen sich als Silyl-Komponente insbesondere 3-(Meth)acryloxypropyltrimethoxysilan, 3-(Meth)acryloxypropylmethyldimethoxysilan, 3-(Meth)acryloxypropyltriethoxysilan, 3-(Meth)acryloxypropylmethyldiethoxysilan, (Meth)acryloxymethyltrimethoxysilan, (Meth)acryloxymethyl-methyldimethoxysilan, (Meth)acryloxymethyltriethoxysilan und (Meth)acryloxymethyl-methyldiethoxysilan.

Die erfindungsgemäßen silyl-terminierten Acrylate besitzen bevorzugt ein gewichtsmittleres Molekulargewicht zwischen 500 und 200000 g/mol, besonders bevorzugt zwischen 5000 und 100000 g/mol.

Bevorzugt zu verwendende silyl-terminierte Acrylate werden in den Patentanmeldungen EP 1498433 und auf Chem. Rev. (2001), 101, 2921-2990 Atom Transfer Radical Polymerization, Krzysztof Matyjaszewski and Jianhui Xia und auf Progress in Polymer Science 32, (2007), 93-146 Controlled/living radical polymerization: Features, developments, and perspectives, Wade A. Braunecker, Krzysztof Matyjaszewski, Elsevier beschrieben.

Unter den erfindungsgemäß verwendbaren Polysulfiden sind organische Polymere zu verstehen, welche Sulfid-Brücken im Polymer aufweisen. Bspw. kann es sich hierbei um ein Produkt der Reaktion eines organischen Dihalogenids mit Natriumdisulfid handeln. Als Beispiele für die organischen Dihalogenide seien aliphatische Dihalogenide (bspw. bis-Chlorethylformal) und Vinylhalogenide genannt. So führt bspw. die Reaktion von bis-Chlorethylformal mit einer Natriumdisulfit-Lösung zu einem Polymer der folgenden Struktur:

-[CH₂CH₂OCH₂OCH₂CH₂Sₓ]ₙ-

worin "n" die Anzahl der Monomere in dem Polymer und "x" die Anzahl der aufeinander folgenden Sulfid-Brücken in dem Monomer darstellt (x kann in den Monomeren des gleichen Moleküls variieren). Derartige hochmolekulare Polymere können dann zu kürzerkettigen Polymeren mit terminalen Thiolgruppen umgesetzt werden (bspw. durch reduktive Umsetzung mit NaSH und Na₂SO₂ und nachfolgendes Ansäuern). Auf diese Weise erhält man flüssige überbrückte Polysulfide mit terminalen Thiol-Endgruppen, welche in speziellen Ausführungsformen ein Molekulargewicht im Bereich von 1000 bis 8000 aufweisen. Die flüssigen Polymere können anschließend zu elastomeren Feststoffen gehärtet werden, bspw. durch die Oxidation der Thiol-Endgruppen zu Disulfit-Brücken unter Verwendung eines Oxidationsreagenzes wie etwa Bleioxid, Mangandioxid, Parachinondioxim und Zinkperoxid. Im Rahmen der vorliegenden Erfindung umfassen die Polysulfid-Kleb- und -Dichtstoffe alle Polysulfid-Polymere, welche durch Härtung in einen Feststoff überführt werden können. In speziellen Ausführungsformen umfassen die Polysulfid-Kleb- und -Dichtstoffe 30 bis 90 Gew.-% mindestens eines flüssigen Polysulfid-Polymers, 2 bis 50 Gew.-% eines Füllstoffs, 2 bis 10 Gew.-% eines Cyclohexanpolycarbonsäurederivats, 1 bis 3 Gew.-% eines Wasserfängers und zwischen 6 und 15 Gew.-% weitere Inhaltsstoffe wie etwa Adhesionspromotoren, Lösungsmittel und Härter. Ein Beispiel für die Herstellung von Polysulfid-Kleb- und - Dichtstoffen wird in der US 3,431,239 offenbart. Polysulfid-Kleb- und -Dichtstoffe können als ein- oder zweikomponentige Systeme eingesetzt werden.

Die bevorzugt erfindungsgemäß einsetzbaren silylierten Polysulfide sind aus mindestens einer Polysulfid-Komponente und mindestens einer Silylierungsmittel-Komponente aufgebaut und werden bevorzugt durch folgende vereinfachte Formel repräsentiert:

(CH₃)₃-Si-S-(C₂H₄OCH₂OC₂H₄Sₓ)ₙ-C₂H₄OCH₂OC₂H₄S-Si-(CH₃)₃

Diese bevorzugten silylierten Polysulfide werden nach folgendem Verfahren hergestellt:

(n+1) Cl-R-Cl + (n+1) Na₂Sₓ HS-(R-Sₓ)ₙ-R-SH + (n+1) 2 NaCl

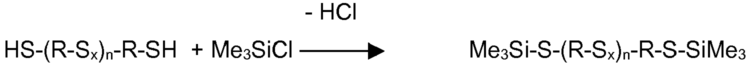

wobei R repräsentiert wird durch ein Alkylgruppe oder eine Ethergruppe.

Bevorzugt zu verwendende silylierte Polysulfide werden in den Veröffentlichungen "ALPIS Aliphatische Polysulfide", Hüthing u. Welpf Verlag, Basel, 1992, Heinz Lucke, ISBN 3-85739-1243 beschrieben.

Die erfindungsgemäß einsetzbaren silylierten Polyether sind aus mindestens einer Polyether-Komponente und mindestens einer Silylierungsmittel-Komponente aufgebaut. Seit einiger Zeit sind Baudichtstoffe auf dem Markt, welche sogenanntes MS-Polymer^{®} der Fa. Kaneka und/oder Excestar der Fa. Asahi Glass Chemical enthalten, wobei "MS" für "modified silicone" steht. Diese silyl-terminierten Polyether sind für die vorliegende Erfindung besonders geeignet. Es handelt sich dabei um Polymere, welche aus Polyetherketten mit Silanendgruppen bestehen, hergestellt durch die Hydrosilylierung von endständigen Doppelbindungen. Die Silanendgruppen bestehen aus einem an die Polyetherkette gebundenen Silizium, an welches zwei Alkoxygruppen und eine Alkylgruppe bzw. drei Alkoxgruppen gebunden sind. Durch die Reaktion mit Feuchtigkeit hydrolysieren die Alkoxygruppen zu Alkoholen, und die entstandenen Si-OH Gruppen kondensieren anschließend zu einem Si-O-Si Netzwerk.

Als Polyetherkomponente für die silyl-terminierten Polyether eignen sich unter anderem die unter Verwendung von Startermolekülen hergestellten Polyole aus Styroloxid, Propylenoxid, Butylenoxid, Tetrahydrofuran oder Epichlorhydrin. Insbesondere geeignet sind Polypropylenoxid, Polybutylenoxid, Polyethylenoxid und Tetrahydrofuran oder deren Mischungen. Hierbei sind insbesondere Molekulargewichte zwischen 500 und 100000 g/mol, besonders 3000 und 20000 g/mol bevorzugt.

Zur Einführung der Doppelbindungen wird der Polyether mit organischen Verbindungen enthaltend ein Halogenatom ausgewählt aus der Gruppe Chlor, Brom oder Jod sowie einer endständigen Doppelbindung umgesetzt. Insbesondere eignen sich hierfür Allylchloride, Allylbromide, Vinyl(chloromethyl)benzol, Allyl(chloromethyl)benzol, Allyl-(bromomethyl)benzol, Allyl(chloromethyl)ether, Allyl(chloromethoxy)benzol, Butenyl-(chloromethyl)ether, 1,6-Vinyl(chloromethoxy)benzol, wobei insbesondere Allylchlorid bevorzugt eingesetzt wird.

Die so erhaltenen Polyether mit endständigen Doppelbindungen werden durch Hydrosilylierung zu den silyl-terminierten Polyethern umgesetzt. Als Hydrosilylierungsmittel eignen sich hierbei insbesondere Trichlorsilan, Methyldichlorsilan, Dimethylchlorosilan, Phenyldichlorosilan sowie Trimethoxysilan, Triethoxysilan, Methyldiethoxysilan, Methyldimethoxysilan und Phenyldimethoxysilan sowie Methyldiacetoxysilan, Phenyldiacetoxysilan, Bis(dimethylketoxymat)methylsilan und Bis(cyclohexylketoxymat)methylsilan. Hierbei sind insbesondere die Halosilane und Alkoxylsilane bevorzugt. Weiterhin wird auf die Beschreibungen in den Patentanmeldungen US 3,971,751, EP 0319896, US 4618653, EP 0184829, EP 0265929, EP 1285946, EP 0918062, Adhesives and Sealants -Technology, Applications and Markets, David J. Drunn, ISBN 1-85957-365-7, Rapra Technology Limited, 2003 und Congress proceedings 27. April 2005 Stick 4th European Congress on Adhesive and Sealant Raw Materials, Innovative Raw Materials for Structural Adhesives, ISBN 3-87870-156-X, Vincentz Network, 2005 verwiesen.

Neben den Komponenten (A) und (B) kann die erfindungsgemäße Zusammensetzung zusätzliche weitere Komponenten enthalten. Dies können unter anderem die folgenden Hilfs- und Zusatzstoffe sein:
- Haftvermittler bspw. Epoxysilane, Anhydridosilane, Addukte von Silanen mit primären Aminosilanen, Ureidosilane, Aminosilane, Diaminosilane, sowie deren Analoga als Monomer oder Oligomer und Harnstoffsilane; z.B. Dynasylan AMEO, Dynasylan AMMO, Dynasylan DAMO-T, Dynasylan 1146, Dynasylan 1189, Silquest A-Link 15, Epoxidharze, Alkyltitanate, Titanchelate, aromatische Polyisocyanate, Phenolharze; die beispielsweise der allgemeinen Formel: 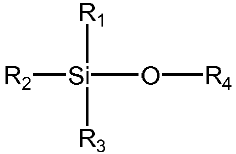 worin
   R₁, R₂ und R₃ unabhängig voneinander Halogen, Amin, Wasserstoff, Alkoxy-, Acyloxy-, Alkyl-, Aryl-, Aralkyloxy-, Alkylaryl-, Aralkylgruppen sowie Alkylgruppe mit olefinischen Gruppen, Halogeniden, Amino-, Carbonyl-, Epoxy- und Glycidoxy-, Ester-, Hydroxyimino-, Mercapto- und Sulfido-, Isocyanato-, Anhydrido-, Acryloxy-, Metharyloxy- und Vinylgruppen sowie Arylgruppe mit olefinischen Gruppen, Halogeniden, Amino-, Carbonyl-, Epoxy- und Glycidoxy-, Ester-, Hydroxyimino-, Mercapto- und Sulfido-, Isocyanato-, Anhydrido-, Acryloxy-, Metharyloxy- und Vinylgruppen sowie Alkylarylgruppe mit olefinischen Gruppen, Halogeniden, Amino-, Carbonyl-, Epoxy- und Glycidoxy-, Ester-, Hydroxyimino-, Mercapto- und Sulfido-, Isocyanato-, Anhydrido-, Acryloxy-, Metharyloxy- und Vinylgruppen sowie Aralkylgruppe mit olefinischen Gruppen, Halogeniden, Amino-, Carbonyl-, Epoxy- und Glycidoxy-, Ester-, Hydroxyimino-, Mercapto- und Sulfido-, Isocyanato-, Anhydrido-, Acryloxy-, Metharyloxy-, und Vinylgruppen, und
   R₄ Alkyl und Aryl entsprechen.
- Wasserfänger z. B. Vinyltriethoxysilan, Vinyltrimethoxysilan, α-funktionelle Silane wie N-(Silylmethyl)-O-methyl-carbamate, insbesondere N-(Methyldimethoxysilylmethyl)-O-methyl-carbamat, (Methacryloxymethyl)silane, Methoxymethylsilane, N-Phenyl-, N-Cyclohexyl- und N-Alkylsilane, Orthoameisensäureester, Calciumoxid oder Molekularsieb;
- Katalysatoren bspw. Metallkatalysatoren in Form von Organozinnverbindungen wie Dibutylzinndilaurat und Dibutylzinndiacetylacetonat, Bismut-organische Verbindungen oder Bismut-Komplexe; aminogruppenhaltige Verbindungen, bspw. 1,4-Diazabicyclo[2.2.2]-octan und 2,2'-Dimorpholinodiethylether, 1,8-Diazabicyclo[5.4.0]undec-7-ene, 1,5-Diazabicyclo[4.3.0]non-5-ene, sowie Aminosilane. Als Metallkatalysatoren kommen weiterhin Titan-, Zirkon-, Bismut-, Zink- und Lithiumkatalysatoren sowie Metallcarboxylate in Frage, wobei auch Kombinationen verschiedener Metallkatalysatoren eingesetzt werden können;
- Licht- und Alterungsschutzmittel, welche insbesondere als Stabilisatoren gegen Wärme, Licht und UV-Strahlung wirken, beispielsweise phenolische Antioxidanzien welche als Radikalfänger fungieren, wie 2,6-Di-tert-butyl-p-cresol, 2,6-Di-tert-butylphenol, 2,4-Dimethyl-6-tert-butylphenol, 2,2'-Methylene-bis(4-methyl-6-tert-butylphenol), 4,4'-Butyliden-bis(3-methyl-6-tert-butylphenol), 4,4'-Thio-bis(3-methyl-6-tert-butylphenol), 5-Tetrakis[methylene-3-(3,5-di-tert-butyl-4-hydroxyphenyl)propionat]methane und 1,1,3-Tris(2-methyl-4-hydroxy-5-tert-butylphenyl)butane und Antioxidanzien auf Basis von Aminen (beispielsweise Phenyl-β-naphthylamin, α-Naphthylamin, N,N'-Di-sec-butyl-p-phenylendiamin, Phenothiazin und N,N'-Diphenyl-p-phenylendiamine)

- Flammschutzmittel, z.B. Al(OH)₃, Huntit, bromierte Alkyl- und Arylverbindungen;
- Biozide, wie bspw. Algizide, Fungizide oder das Pilzwachstum hemmende Substanzen, z.B. Ag, Ag⁺, CH₂O -abspaltende Verbindungen;
- Füllstoffe, z. B. gemahlene oder gefällte Calciumcarbonate, welche ggf. mit Fettsäuren bzw. Fettsäurengemischen beschichtet sind, z.B. Stearate, insbesondere feinteiliges beschichtetes Calciumcarbonat, Ruße, insbesondere industriell hergestellte Ruße, Kaoline, Aluminiumoxide, Kieselsäuren, insbesondere hochdisperse Kieselsäure aus Pyrolyseprozessen, PVC-Pulver oder Hohlkugeln. Bevorzugte Füllstoffe sind Ruß, Calciumcarbonate, wie bspw. gefällte oder natürliche Kreidetypen wie Omya 5 GU, Omyalite 95 T, Omyacarb 90 T, Omyacarb 2 T-AV^{®} der Fa. Omya, Ultra P-Flex^{®} der Fa. Specialty Minerals Inc, Socal^{®} U1S2, Socal^{®} 312, Winnofil^{®} 312 der Fa. Solvay, Hakuenka^{®} der Fa. Shiraishi, hochdisperse Kieselsäuren aus Pyrolyseprozessen sowie Kombinationen aus diesen Füllstoffen. Ebenfalls geeignet sind Mineralien wie Kieselerde, Talk, Calciumsulfat (Gips) in Form von Anhydrit, Halbhydrat oder Dihydrat, Quarzmehl, Kieselgel, gefälltes oder natürliches Bariumsulfat, Titandioxid, Zeolithe, Leucit, Kalifeldspat, Biotid, die Gruppe der Soro-, Cyclo-, Ino-, Phyllo- und Hectosilicate, die Gruppe der schwerlöslichen Sulfate wie Gips, Anhydrit oder Schwerspat (BaSO₄) sowie Calciummineralien wie Calcit, pulverförmige Metalle (beispielsweise Aluminium, Zink oder Eisen) und Bariumsulfat;
- Rheologie-Modifizierer, wie Verdickungsmittel, z. B. Harnstoffverbindungen sowie Monoamine , z.B. n-Butylamin, Methoxybutylamin und Polyamidwachse, Bentonite, Silicone, Polysiloxane, hydriertes Rizinusöl, Metallseifen, wie Calciumstearat, Aluminumstearat, Bariumstearat, gefällte Kieselsäure, pyrogene Kieselsäure sowie Poly(oxy-1,2-ethandiyl)-α-hydro-Ω-hydroxy-polymer mit Oxy-1,2-ethandiyl-α - hydro-Ω-hydroxy-nonyl-phenoxyglycidylether Oligomeren und 5-Isocyanato-1-(iso-cyanatomethyl)-1,3,3-trimethylcyclohexan oder Hydroxyethylcellulose oder Polyacrylsäure-Polymere und Copolymere;
- Oberflächenaktive Substanzen wie bspw. Netzmittel, Verlaufsmittel, Entlüftungsmittel, Entschäumer und Dispergiermittel;
- Fasern, bspw. aus Kohlenstoff, Polyethylen oder Polypropylen, SiO₂, Cellulose;
- Pigmente, bspw. Titandioxid;
- Lösemittel wie etwa Wasser, Solvent Naphta, Methylester, aromatische Kohlenwasserstoffe wie Polyalkylbenzole, Toluol und Xylol, Lösungsmittel auf Basis von Estern wie Ethylacetat, Butylacetat, Allylacetat und Celluloseacetat und Lösungsmittel auf Basis von Ketonen wie Methylethylketon, Methylisobutylketon und Diisobutylketon sowie Aceton und Mischungen aus mindestens zwei der vorgenannten Lösungsmittel
sowie weitere in Kleb- und Dichtstoffen eingesetzte Substanzen.

Als weitere Komponenten können die erfindungsgemäßen Kleb- und Dichtstoff- weitere Weichmacher enthalten. Insbesondere kann es sich hierbei um C₄- bis C₈-Alkylterephthalate der folgenden allgemeinen Formel handeln: 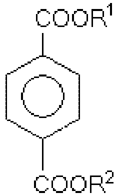 R¹ und R² sind jeweils verzweigte oder unverzweigte Alkyl- oder Cycloalkyl-Gruppen mit 4 bis 8 gesättigten und unsubstituierten Kohlenstoffatomen, wobei R¹ und R² jeweils gleiche oder verschiedene Reste repräsentieren können. Geeignet ist hierbei praktisch jede Alkyl- oder Cycloalkyl-Gruppe, die unter die vorhergehende Definition fällt. Als Beispiele seien 2-Ethylhexyl, n-Octyl, 2-Methylpentyl, iso-Butyl, n-Butyl, tert-Butyl, Pentyl, iso-Pentyl, Neopentyl, Hexyl, Heptyl und Isoheptyl genannt. In verschiedenen Ausführungsformen können die Terephthalate aus einer kleineren Gruppe der Terephthalate ausgewählt werden, wie etwa den C₄- bis C₇-Alkylterephthalaten, C₄- bis C₆-Alkylterephthalaten, C₆- bis C₈-Alkylterephthalaten oder C₅- bis C₈-Alkylterephthalaten oder aus den Gruppen der C₄- bis C₅-Alkylterephthalate, C₅- bis C₆-Alkylterephthalate, C₆- bis C₇-Alkylterephthalate oder C₇- bis C₈-Alkylterephthalate. In einer speziellen Ausführungsform handelt es sich bei R¹ und R² jeweils um eine n-Butyl-Gruppe, woraus sich Di-n-butylterephthalat ergibt. In einer weiteren Ausführungsform kann es sich bei R¹ und R² jeweils um iso-Butyl-Gruppen handeln, wobei sich hieraus Di-isobutylterephthalat ergibt. In einer besonders bevorzugten Ausführungsform handelt es sich bei R¹ und R² um 2-Ethylhexyl-Gruppen, so dass es sich um bis-2-Ethylhexylterephthalat handelt, welches auch als Di-2-ethylhexylterephthalat (DEHT) bezeichnet wird. Ein derartiges Produkt ist kommerziell unter dem Namen DEHT-Eastman^{™} 168 erhältlich.

Weiterhin kann es sich bei dem Weichmacher auch um mindestens eine der folgenden Verbindungen handeln: Glycerintriacetat (Triacetin), 2,2,4-Trimethyl-1,3-pentandioldiisobutyrate, Phthalsäureester wie etwa Dioctylphthalat, Di-2-ethylhexylphthalat (DEHP), Diisooctylphthalat (DIOP), Diisononylphthalat (DINP), Di-n-nonylphthalat, n-Nonyl-n-undecylphthalat, Di-n-undecylphthalat, Di-undecylphthalat (DUP), Diisodecylphtalate (DIDP), Phthalate mit linearen C₆ bis C₁₀-Resten, Ditridecyl phthalat (DTDP), Undecyldodecylphthalat, Di(2-propylheptyl)phthalat, Nonylundecyl phthalat, Texanolbenzylphthalat, Polyesterphthalat, Diallylphthalat, n-Butylphthalyl-n-butylglycosat, Dicaprylphthalat, Butylcyclohexylphthalat (BCP), Di-cyclohexylphthalat oder Butyloctylphthalat, Dioctyladipat (DOA), Di-2-ethylhexyladipat, Düsononyladipat (DINA), Düsooctyladipat (DIOA), Düsodecyladipat, Ditridecyladipat (DITA), Dibutoxyethyladipat, Dibutoxyethoxyadipat, Di(n-octy)adipat, Polyesteradipate, Polyglycoladipate, Trioctyltrimellitate, Tri-2-ethylhexyltrimellitat (TOTM), Triisooctyltrimellitat (TIOTM), Triisononyltrimellitat, Trüsodecyltrimellitat, Tri-n-hexyltrimellitat, Dioctylazelat (DOZ), Di-2-ethylhexylglutarat, Di-2-ethylhexylsebecat, Dibutylsebecat, Dibutoxyethylsebecat, Triethylcitrat, Acetyltriethylcitrat, Tri-n-butylcitrat, Acetytri-n-butylcitrat, Acetyltri-n-hexylcitrat, n-Butyl-tri-n-hexylcitrat, Isodecylbenzoat, Diethyleneglycoldibenzoat, Dipropyleneglycoldibenzoat, Triethyleneglycoldibenzoat, 1,4-Cyclohexanedimethanoldibenzoat, 2,2,4-Trimethyl-1,3-pentanedioldibenzoat, 2,2-Dimethyl-1,3-propanedioldibenzoate, C₁₀-C₂₁ Alkansäurephenolester oder Alkylsulphonsäurephenolester, Reaktionsprodukte von Essigsäure mit gehärtetem Rhizinusöl, Pentaerythritoltetrabenzoat, Glyceroltribenzoat, Polypropyleneglycoldibenzoat, Triarylphosphate, Polymere der Adipinsäure, Phthalate, Adipate und/oder Sebacate mit Glycol, Butylbenzylphthalat, Alkylbenzylphthalat, C₇-C₉ Butylphthalate, Diethylenglycoldibenzoat, Dipropylenglycoldibenzoat, 2-Ethylhexylbenzoat, C₉-Benzoate, C₁₀-Benzoate, Texanolbenzoat, Ethylenglycoldibenzoat, Propylenglycoldibenzoat, Triethylenglycoldibenzoat, Diheptylphthalat (DHP), Dihexylphthalat, Di-methylphthalat, Diethylphthalat, Dibutylphthalat und Diisobutylphthalat.

Als Weichmacher können auch Ester einer aliphatischen oder aromatischen Di- oder Tricarbonsäure mit einer C₁₀-Alkoholkomponente enthaltend 2-Propylheptanol oder ein C₁₀-Alkoholgemisch aus 2-Propylheptanol und mindestens einem der C₁₀-Alkohole 2-Propyl-4-methyl-hexanol, 2-Propyl-5-methyl-hexanol, 2-Isopropyl-heptanol, 2-Isopropyl-4-methyl-hexanol, 2-Isopropyl-5-methyl-hexanol und/oder 2-Propyl-4,4-dimethylpentanol eingesetzt werden, wobei die aliphatische oder aromatische Di- oder Tricarbonsäure ausgewählt ist aus der Gruppe bestehend aus Zitronensäure, Phthal-säure, Isophthalsäure, Terephthalsäure und Trimellitsäure.

Die Verwendung des Ausdrucks "Alkoholkomponente" trägt dem Umstand Rechnung, dass in den erfindungsgemäßen C₁₀-Estergemischen die genannten C₁₀-Alkohole in veresterter Form vorliegen.

Die C₁₀-Alkoholkomponente der erfindungsgemäßen C₁₀-Estergemische enthält im wesentlichen 2-Propylheptanol oder Gemische des 2-Propylheptanols mit einem oder mehreren seiner Isomeren 2-Propyl-4-methyl-hexanol, 2-Propyl-5-methyl-hexanol, 2-Isopropyl-heptanol, 2-Isopropyl-4-methyl-hexanol, 2-Isopropyl-5-methyl-hexanol und/ oder 2-Propyl-4,4-dimethylpentanol. Diese Verbindungen werden nachstehend zur Abkürzung als "Propylheptanol-Isomere" bezeichnet. Die Anwesenheit anderer Isomere der 2-Propylheptanol-Komponente - beispielsweise von den zu 2-Propylheptanol isomeren Alkoholen 2-Ethyl-2,4-dimethylhexanol, 2-Ethyl-2-methyl-heptanol und/oder 2-Ethyl-2,5-dimethylhexanol herrührend - in der erfindungsgemäßen C₁₀-Alkoholkomponente ist möglich. Aufgrund der geringen Bildungsraten der aldehydischen Vorläufer dieser Isomere im Zuge der Aldolkondensation sind diese, wenn überhaupt, nur in Spuren in der C₁₀-Alkoholkomponente enthalten und spielen für die Weichmachereigenschaften der die erfindungsgemäße C₁₀-Alkoholkomponente enthaltenden Weichmacher praktisch keine Rolle.

In einer bevorzugten Ausführungsform enthält der Kleb- oder Dichtstoff als Weichmacher mindestens ein Cyclohexanpolycarbonsäure-Derivate der Formel (I), 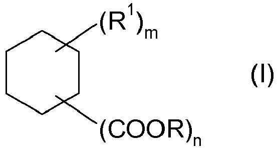 worin
- R¹: für C₁-C₁₀-Alkyl oder C₃-C₈-Cycloalkyl steht,
- m: für 0, 1, 2, 3 oder 4 steht,
- n: für 2, 3 oder 4 steht, und
- R: für Wasserstoff oder C₁-C₃₀-Alkyl, C₁-C₃₀-Alkoxy, C₃-C₈-Cycloalkyl, C₆-C₃₀-Arylphenyl oder C₁-C₃₀ Alkyl-Cycloalkyl steht, wobei mindestens ein Rest R für C₁-C₃₀-Alkyl, C₁-C₃₀-Alkoxy oder C₃-C₈-Cycloalkyl, steht.

In der Formel (I) können die Reste R¹ gleich oder verschieden sein, wenn m = 2, 3 oder 4 ist. Die C₁-C₁₀-Alkylgruppen können geradkettig oder verzweigt sein. Wenn R¹ für eine Alkylgruppe steht, handelt es sich bevorzugt um eine C₁-C₈-Alkylgruppe, besonders bevorzugt um eine C₁-C₆-Alkylgruppe. Beispiele für derartige Alkylgruppen sind Methyl, Ethyl, n-Propyl, i-Propyl, n-Butyl, i-Butyl, sek.-Butyl, tert.-Butyl, n-Pentyl, n-Hexyl, n-Octyl und 2-Ethylhexyl. Bevorzugt ist m = 0.

Die Reste R können gleich oder verschieden sein. Die C₁-C₃₀-Alkylgruppen und die Alkylreste der C₁-C₃₀-Alkoxygruppen können geradkettig oder verzweigt sein. R ist bevorzugt C₁-C₃₀-Alkyl, C₁-C₂₀-Alkyl, besonders bevorzugt C₁-C₁₈-Alkyl, ganz besonders bevorzugt C₁-C₁₃-Alkyl. Beispiele für derartige Alkylgruppen sind die bereits für R¹ genannten Alkylgruppen sowie n-Nonyl, iso-Nonyl, n-Decyl, iso-Decyl, n-Undecyl, iso-Undecyl, n-Dodecyl, iso-Dodecyl, n-Tridecyl, iso-Tridecyl, Stearyl, und n-Eicosyl.

Bei den Alkylgruppen kann es sich jeweils um einzelne Isomere der genannten Alkylgruppen oder um Gemische verschiedener Alkylgruppen handeln. Die verschiedenen Alkylgruppen können verschiedene Isomere mit derselben Zahl von Kohlenstoffatomen sein und/oder Alkylgruppen, die eine verschiedene Anzahl von Kohlenstoffatomen aufweisen.

Bei den erfindungsgemäß verwendeten Cyclohexanpolycarbonsäure-Derivaten handelt es sich insbesondere um Mono-, Di-, Tri-, Tetraester und Anyhdride der Cyclohexanpolycarbonsäuren. Bevorzugt liegen alle Carbonsäuregruppen in veresterter Form vor. Die eingesetzten Ester sind Alkyl-, Cycloalkyl- sowie Alkoxyalkylester, bevorzugt Alkylester, wobei bevorzugte Alkylgruppen R bereits vorstehend genannt sind.

Bevorzugt ist das mindestens eine Cyclohexanpolycarbonsäurederivat ausgewählt aus der Gruppe bestehend aus kernhydrierten Mono- und Dialkylestern der Phthalsäure, Isophthalsäure und Terephthalsäure, kernhydrierten Mono-, Di- und Trialkylestern der Trimellitsäure, der Trimesinsäure und der Hemimellitsäure oder Mono-, Di-, Tri- und Tetraalkylestern der Pyromellitsäure, wobei die Alkylgruppen R linear oder verzweigt sein können und jeweils 1 bis 30, bevorzugt 1 bis 20, besonders bevorzugt 1 bis 18, ganz besonders bevorzugt 1 bis 13 Kohlenstoffatome aufweisen, und Gemischen aus zwei oder mehr davon. Geeignete Alkylgruppen R sind vorstehend bereits genannt.

Im Sinne der vorliegenden Erfindung geeignet sind darüber hinaus auch die in der WO 2010/028870 offenbarten Cyclohexan-1,2-dicarbonsäureester. Der Inhalt der WO 2010/028870 von Seite 4, Zeile 33 bis Seite 31, Zeile 17 wird durch Bezugnahme in die vorliegende Anmeldung einbezogen.

Geeignet sind darüber hinaus auch die in der WO 99/32427 offenbarten Cyclohexan1,2-dicarbonsäureester. Der Inhalt der WO 99/32427 von Seite 21, Zeile 1 bis Seite 22, Zeile 15 wird durch Bezugnahme in die vorliegende Anmeldung einbezogen.

Erfindungsgemäß sind auch Hydrierprodukte von Phthalsäure-Mischestern mit C₁₀- und C₁₃-Alkoholen verwendbar wie sie in der DE-A 100 32 580.7 beschrieben sind. Des weiteren sind auch die Hydrierungsprodukte der kommerziell erhältlichen Benzolcarbonsäureester mit den Handelsnamen Jayflex DINP (CAS Nr. 68515-48-0), Jayflex DIDP (CAS Nr. 68515-49-1), Palatinol 9-P, Vestinol 9 (CAS Nr. 28553-12-0), TOTM-I (CAS Nr. 3319-31-1), Linplast 68-TM, Palatinol N (CAS Nr. 28553-12-0), Jayflex DHP (CAS Nr. 68515-50-4), Jayflex DIOP (CAS Nr. 27554-26-3), Jayflex UDP (CAS Nr. 68515-47-9), Jayflex DIUP (CAS Nr. 85507-79-5), Jayflex DTDP (CAS Nr. 68515-47-9), Jayflex L9P (CAS Nr. 68515-45-7), Jayflex L911 P (CAS Nr. 68515-43-5), Jayflex L11P (CAS Nr. 3648-20-2), Witamol 110 (CAS Nr. 90193-91-2), Witamol 118 (Di-n-C8-C10-alkylphthalat), Unimoll BB (CAS Nr. 85-68-7), Linplast 1012 BP (CAS Nr. 90193-92-3), Linplast 13 XP (CAS Nr. 27253-26-5), Linplast 610 P (CAS Nr. 68515-51-5), Linplast 68 FP (CAS Nr. 68648-93-1) und Linplast 812 HP (CAS Nr. 70693-30-0), Palatinol AH (CAS Nr. 117-81-7), Palatinol 711 (CAS Nr. 68515-42-4), Palatinol 911 (CAS Nr. 68515-43-5), Palatinol 11 (CAS Nr. 3648-20-2), Palatinol Z (CAS Nr. 26761-40-0) und Palatinol DIPP (CAS Nr. 84777-06-0) als geeignet im Sinne der vorliegenden Erfindung zu bewerten.

Besonders bevorzugte erfindungsgemäße Kleb- und Dichtstoffe umfassen Dialkylester der 1,2-Cyclohexandicarbonsäure. Als Estergruppe R bevorzugt sind geradkettige oder verzweigte Alkylgruppen mit 1 bis 13 C-Atomen oder Gemische der genannten Alkylgruppen. Als Estergruppe R besonders bevorzugt sind geradkettige oder verzweigte Alkylgruppen mit 8 bis 10 C-Atomen oder Gemische der genannten Alkylgruppen. Als Estergruppe R ganz besonders bevorzugt sind Alkylgruppen mit 9 C-Atomen. Besonders bevorzugt handelt es sich um 1,2-Cyclohexandicarbonsäuredüsononylester. Der Kleb- oder Dichtstoff umfasst in einer Ausführungsform 10 bis 90 Gew.-% Komponente (A), 0,32 bis 50 Gew.-% Komponente (B), 0 bis 80 Gew.-% Füllstoffe und 0 bis 20 Gew.-% Rheologiemodifizierer. In einer bevorzugten Ausführungsform sind 1 bis 80 Gew.-% Füllstoffe, 0 bis 50 Gew.-% Wasser und/oder Lösemittel und 0,5 bis 20 Gew.-% Rheologiemodifizierer anwesend. Als bevorzugt ist weiterhin eine Menge von 25 bis 40 Gew.-% Komponente (A), 0,4 bis 40 Gew.-% Komponente (B), 30 bis 55 Gew.-% Füllstoffe, 0 bis 10 Gew.-% Wasser und 1 bis 10 Gew.-% Rheologiemodifizierer anzusehen.

Bevorzugt enthält der erfindungsgemäße Kleb- oder Dichtstoff die Komponente (B) in einer Menge zwischen 0,5 bis 35 Gew.-%, insbesondere zwischen 0,8 bis 30 Gew.-%, und besonders bevorzugt zwischen 1 bis 20 Gew.-%, bezogen auf den gesamten Kleb- oder Dichtstoff.

Bevorzugt handelt es sich im Falle der Polyurethane, silylierten Polyurethane, silylierten Polyharnstoffe, silylierten Polyether und silylierten Polysulfide bei dem erfindungsgemäßen Kleb- und Dichtstoffen um Einkomponenten-Systeme. Es kann aber auch vorteilhaft sein, das erfindungsgemäße System als Zweikomponenten-Systeme auszuführen. Hierbei enthält die eine Komponente die Polymerkomponente (A), während die zweite Komponente beispielsweise einen Katalysator oder mikronisiertes Wasser als Booster enthält, der die Aushärtung des Systems beschleunigt. Es ist vorteilhaft, darauf zu achten, dass die eingesetzten Komponenten in einem Einkomponenten-System die Lagerstabilität der Zusammensetzung nicht beeinträchtigen, d. h. dass sie während der Lagerung die zur Vernetzung führende Reaktion der in der Zusammensetzung enthaltenen Silangruppen nicht in signifikantem Ausmaß auslösen. Insbesondere bedeutet dies, dass solche weiteren Komponenten bevorzugt kein oder höchstens Spuren von Wasser enthalten. Es kann daher sinnvoll sein, gewisse Komponenten vor dem Einmischen in diese Zusammensetzungen chemisch oder physikalisch zu trocknen. Ist dies nicht möglich oder nicht gewünscht, kann es in diesen Fällen vorteilhaft sein, den Kleb- oder Dichtstoff als Zweikomponenten-System auszuführen, wobei die Komponente oder die Komponenten, welche die Lagerstabilität nachteilig beeinflussen, getrennt von Komponente (A) in die zweite Komponente formuliert werden.

Die erfindungsgemäßen Zusammensetzungen enthaltend silylierte Polyurethane, silylierte Polyharnstoffe, silylierte Polyether und silylierte Polysulfide werden unter Ausschluss von Feuchtigkeit aufbewahrt, sie sind lagerstabil, d. h. sie können unter Ausschluss von Feuchtigkeit in einer geeigneten Verpackung oder Anordnung wie bspw. einem Fass, einem Beutel oder einer Kartusche über einen Zeitraum von mehreren Monaten bis zu einigen Jahren aufbewahrt werden, ohne dass sie sich in ihren Anwendungseigenschaften oder in ihren Eigenschaften nach der Aushärtung in einem für den Gebrauch relevanten Ausmaß verändern. Üblicherweise wird die Lagerstabilität über die Messung der Viskosität, der Auspressmenge oder der Auspresskraft ermittelt.

Die Silangruppen haben die Eigenschaft, bei Kontakt mit Feuchtigkeit zu hydrolysieren. Dabei bilden sich Organosilanole (siliciumorganische Verbindung enthaltend ein- oder mehrere Silanolgruppen, SiOH-Gruppen) und durch nachfolgende Kondensationsreaktionen Organosiloxane (siliciumorganische Verbindung enthaltend ein oder mehrere Siloxangruppen, Si-O-Si-Gruppen). Als Ergebnis dieser Reaktion, welche durch den Einsatz von Katalysatoren beschleunigt werden können, härtet die Zusammensetzung schließlich aus. Dieser Prozess wird auch als Vernetzung bezeichnet. Das für die Aushärtungsreaktion benötigte Wasser kann entweder aus der Luft stammen (Luftfeuchtigkeit) oder aber die Zusammensetzung kann mit einer Wasser enthaltenden Komponente in Kontakt gebracht werden, z. B. durch Bestreichen bspw. mit einem Abglättmittel oder durch Besprühen oder es kann der Zusammensetzung bei der Applikation eine Wasser enthaltende Komponente zugesetzt werden, z. B. in Form einer wasserhaltigen Paste, die bspw. über einen Statikmischer eingemischt wird.

Die Silangruppen enthaltenden Zusammensetzungen härten, bei Kontakt mit Feuchtigkeit aus. Die Aushärtung erfolgt je nach Temperatur, Art des Kontaktes, der Menge der Feuchtigkeit und der Anwesenheit allfälliger Katalysatoren unterschiedlich schnell. Bei der Aushärtung mittels Luftfeuchtigkeit wird zunächst eine Haut an der Oberfläche der Zusammensetzung gebildet. Die sog. Hautzeitbildung stellt demnach ein Maß für die Aushärtungsgeschwindigkeit dar. Typischerweise ist eine derartige Hautbildungszeit von bis zu 2 Stunden bei 23 °C und 50 %iger relativer Luftfeuchtigkeit erstrebenswert. Die Zusammensetzungen enthaltend silylierte Polyurethane, silylierte Polyharnstoffe, silylierte Polyether und silylierte Polysulfide verfügen im ausgehärteten Zustand über eine hohe mechanische Festigkeit bei einer hohen Dehnbarkeit sowie über gute Haftungseigenschaften. Dadurch eignen sie sich für eine Vielzahl von Anwendungen, insbesondere als elastischer Klebstoff, als elastischer Dichtstoff oder als elastische Beschichtung. Insbesondere eignen sie sich für Anwendungen, welche eine schnelle Aushärtung erfordern und hohe Anforderungen an die Dehnbarkeit stellen bei gleichzeitig hohen Anforderungen an die Haftungseigenschaften und die Festigkeiten.

Ein weiterer Gegenstand der vorliegenden Erfindung ist die Verwendung des Kleb- oder Dichtstoffes als Ein- oder Zwei-Komponenten-System zur Herstellung von stoffschlüssigen Verbindungen zwischen Fügeteilen. Die erfindungsgemäße Zusammensetzung verfügt im ausgehärteten Zustand über eine hohe mechanische Festigkeit bei einer hohen Dehnbarkeit sowie über gute Haftungseigenschaften. Dadurch eignet sie sich für eine Vielzahl von Anwendungen, insbesondere als elastischer Klebstoff, als elastischer Dichtstoff oder als elastische Beschichtung. Insbesondere eignet sie sich für Anwendungen, welche eine schnelle Aushärtung erfordern und hohe Anforderungen an die Dehnbarkeit stellen bei gleichzeitig hohen Anforderungen an die Haftungseigenschaften und die Festigkeiten.

Geeignete Anwendungen sind bspw. die stoffschlüssigen Verbindungen zwischen Fügeteilen aus Beton, Mörtel, Glas, Metall, Keramik, Kunststoff und/oder Holz. In einer besonderen Ausführungsform handelt es sich bei den Fügeteilen zum einen um eine Oberfläche und zum anderen um einen Teppichbelag, einen PVC-Belag, ein Laminat, einen Gummibelag, einen Korkbelag, einen Linoleumbelag, einen Holzbelag, z.B. Parkett, Dielen, Schiffsboden oder Fliesen. Insbesondere kann die erfindungsgemäße Zusammensetzung für das Verfugen von Natursteinen verwendet werden. Weiterhin können die erfindungsgemäßen Kleb- und Dichtstoffe für die Fertigung oder Reparatur von industriellen Gütern oder Konsumgütern eingesetzt werden sowie für das Abdichten oder Verkleben von Bauteilen im Hoch- oder Tiefbau sowie insbesondere im Sanitärbereich. Im speziellen kann es sich bei den Fügeteilen um Teile im Auto-, Trailer-, LKW-, Wohnwagen-, Zug-, Flugzeug-, Schiff- und Gleisbau handeln.

Ein Klebstoff für elastische Verklebungen in diesem Bereich wird bevorzugt in Form einer Raupe in einer im Wesentlichen runden oder dreieckigen Querschnittsfläche aufgetragen. Elastische Verklebungen im Fahrzeugbau sind bspw. das Ankleben von Teilen wie Kunststoffabdeckungen, Zierleisten, Flansche, Stossstangen, Führerkabinen oder andere Anbauteile an die lackierte Karosserie eines Transportmittels oder das Einkleben von Scheiben in die Karosserie.

Ein bevorzugter Anwendungsbereich im Hoch- und Tiefbau sind Hochbaufugen, Bodenfugen, Fugen nach dem Wasserhaushaltsgesetz, Anschlussfugen, Dehnfugen oder Dichtfugen im Sanitärbereich. In einer bevorzugten Ausführungsform wird die beschriebene Zusammensetzung als elastischer Kleb- oder Dichtstoff eingesetzt. Als elastischer Klebstoff weist die Zusammensetzung typischerweise eine Bruchdehnung von mindestens 5 % und als elastischer Dichtstoff von mindestens 300 % bei Raumtemperatur auf.

Für eine Anwendung der Zusammensetzung als Dichtstoff für bspw. Fugen im Hoch- oder Tiefbau oder für eine Anwendung als Klebstoff für elastische Verklebungen bspw. im Fahrzeugbau weist die Zusammensetzung vorzugsweise eine pastöse Konsistenz mit strukturviskosen Eigenschaften auf. Ein solcher pastöser Dichtstoff oder Klebstoff wird mittels einer geeigneten Vorrichtung auf das Fügeteil aufgetragen. Geeignete Methoden zum Auftragen sind bspw. die Applikation aus handelsüblichen Kartuschen, Schlauchbeuteln oder in Kartuschen eingelegten Schlauchbeuteln, welche manuell oder mittels Druckluft betrieben werden oder aus einem Fass oder Hobbock mittels einer Förderpumpe oder einer Exzenterschneckenpumpe, ggf. mittels eines Applikationsroboters.

Die Fügeteile können bei Bedarf vor dem Applizieren des Kleb- oder Dichtstoffes vorbehandelt werden. Derartige Vorbehandlungen umfassen insbesondere physikalische und/oder chemische Reinigungsverfahren bspw. Schleifen, Sandstrahlen, Bürsten oder dgl. oder Behandeln mit Reinigern oder Lösemitteln oder das Aufbringen eines Haftvermittlers, einer Haftvermittlerlösung oder eines Primers.

Bei der Anwendung als Klebstoff wird die erfindungsgemäße Zusammensetzung entweder auf das eine oder das andere Fügeteil oder auf beide Fügeteile appliziert. Danach werden die zu klebenden Teile gefügt, worauf der Klebstoff aushärtet. Es ist jeweils darauf zu achten, dass das Fügen der Teile innerhalb der sog. Offenzeit erfolgt, um zu gewährleisten, dass die beiden Fügeteile verlässlich miteinander verklebt werden.

Ein weiterer Gegenstand der vorliegenden Erfindung ist ein Verfahren zur Herstellung eines Kleb- oder Dichtstoffes, wobei a) Komponente (A), Komponente (B) und optional mindestens eine Verbindung aus der Reihe Füllstoff, Weichmacher, Thixotropiermittel, Antioxidans und UV-Absorber vorgelegt werden, b) optional mindestens eine Verbindung aus der Reihe Lösungsmittel und Haftvermittler zugesetzt wird, und die Komponenten homogen gemischt werden.

Für das erfindungsgemäße Herstellverfahren ist es als bevorzugt anzusehen, dass die eingesetzten Komponenten während des gesamten Prozesses, miteinander gemischt bzw. in Bewegung gehalten werden. Alternativ können die eingesetzten Komponenten auch erst am Ende des Herstellverfahrens miteinander gemischt werden. Als Mischeinrichtungen eignen sich alle dem Fachmann hierfür bekannten Vorrichtungen, insbesondere kann es sich um einen statischen Mischer, Planetenmischer, horizontalen Turbulentmischer (Fa. Drais), Planetendissolver bzw. Dissolver (Fa. PC Laborsysteme), Intensivmischer und/oder Extruder handeln.

Das erfindungsgemäße Verfahren zur Herstellung des Kleb- oder Dichtstoffes kann diskontinuierlich bspw. in einem Planetenmischer durchgeführt werden. Es ist aber auch möglich, das Verfahren kontinuierlich zu betreiben, wobei sich hierfür insbesondere Extruder als geeignet erwiesen haben. Hierbei wird das Bindemittel in den Extruder gegeben und flüssige sowie feste Zuschlagsstoffe zudosiert.

Überraschend wurde gefunden, dass die erfindungsgemäßen Kleb- und Dichtstoffe, im Vergleich zum Stand der Technik, gute mechanische Eigenschaften sowie einen niedrigeren Fließpunkt aufweisen und ein optimales Glättergebnis liefern. Durch die Bereitstellung der erfindungsgemäßen Kleb- und Dichtstoffe konnte somit die gestellt Aufgabe in vollem Umfang gelöst werden.

Die nachfolgenden Beispiele verdeutlichen die Vorteile der vorliegenden Erfindung.

### Beispiele

### Herstellungsbeispiel 1:

### Herstellung von 2-Ethylhexyl-methyl-terephthalat

In eine 2000 ml Mehrhalskolben-Rührapparatur, bestehend aus einem Intensivkühler, welcher an einen Thermostaten angeschlossen ist und eine Destillationsbrücke werden 1 mol Dimethylterephtalat in 1,2 L Xylol bei 40 °C vorgelegt und eine Mischung aus 340 mg Titan(IV)-butylat und 1 mol 2-Ethyl-1-hexanol zugetropft.

Anschließend wird das Gemisch auf 130 °C aufgeheizt und unter Rückfluss 8 h gekocht (Intensivkühler auf 80 °C temperieren). Das sich bildende Methanol wird während der Reaktion abdestilliert.

Nach der Reaktion wird das Gemisch innerhalb von 8 h auf 20 °C abgekühlt und der sich bildende Bodensatz über Glaswolle filtriert. Der Filterkuchen bestehend aus Dimethylterephtalat wird verworfen und das Filtrat für 5 h bei -10 °C gelagert. Anschließend wird erneut über Glaswolle filtriert und sich bildendes Dimethylterephtalat abgetrennt. Zur Abtrennung des Lösemittels Xylol wird das Filtrat bei einem Vakuum von 25 mbar und 40 °C abdestilliert. Das so erhaltene 2-Ethylhexyl-methyl-terephthalat hat laut GC MS eine Reinheit von 54,3 Gew.-%. Der Rest von 45,7 Gew.-% ist Di-2- ethylhexylterephthalat.

### Anwendungsbeispiel 1

Das Bindemittel Acronal S 410 wird auf einen pH Wert von 8 eingestellt. Danach wird der Pigmentverteiler NL vorgelegt, Lutensol AO 89 zugegeben und die Komponenten miteinander vermischt. Im Anschluss werden der jeweilige Weichmacher, Kronos 2056 und Omyacarb 2 SV zugefügt und gemischt. Der Dichtstoff wird in Aluminium- oder Kunststoffkartuschen abgefüllt.

### Anwendungsbeispiel 2

Weichmacher, Socal U1S2 und Omyalite 90 T werden vorgelegt und bei einer Temperatur von 60°C im Vakuum miteinander vermischt. Im Anschluss werden Bindemittel und Aerosil R 202 zugegeben. Im letzten Schritt werden Dynasylan GLYMO und Metatin 740 zugefügt und gemischt. Der Dichtstoff wird in Aluminium- oder Kunststoffkartuschen abgefüllt.

### Anwendungsbeispiel 3

1/3 des Bindemittels PP 600, der jeweilige Weichmacher und Omyacarb 2SV, werden vorgelegt und im Vakuum miteinander vermischt. Im Anschluss werden 2/3 PP 600 und Aerosil R 202 zugegeben. Im letzten Schritt werden Dynasylan GLYMO, und Lupranat N 106 DMDEE zugefügt und gemischt. Der Dichtstoff wird in Aluminium- oder Kunststoffkartuschen abgefüllt. Die jeweiligen Formulierungen sind in den Tabellen wiedergegeben, wobei sich die Zahlenangaben in den Spalten auf Gewichtsteile beziehen.

Die Weichmachermischung besteht aus

| | Gew.-% |
|---|---|
| Di-2-ethylhexylterephthalat | 45,7 |
| 2-Ethylhexyl-methyl-terephthalat | 54,3 |

### Anwendungsbeispiel 1

| | Acrylat 1 (Vergleich) | Acrylat 2 (erfindungsgemäß) | Acrylat 3 (erfindungsgemäß) |
|---|---|---|---|
| DOTP | 20,00 | 18,16 | 1,59 |
| Weichmacher Mischung | - | 2,03 | 20,37 |
| Acronal S 410 pH 8 | 32,00 | 32,00 | 32,00 |
| Kronos 2056 | 1,50 | 1,50 | 1,50 |
| Omyacarb 2 SV | 45,60 | 45,41 | 43,64 |
| Pigmentverteiler NL | 0,60 | 0,60 | 0,60 |
| Lutensol AO 89 | 0,30 | 0,30 | 0,30 |
| | | | |
| Zugfestigkeit [Mpa] | 0,39 | 0,31 | 0,35 |
| Bruchdehnung [%] | 125,00 | 105,00 | 115,00 |
| Fließpunkt [Pa] | 7.753 | 6.113 | 5.024 |
| Hautbildezeit [min] | 26 | 20 | 24 |
| Glättbarkeit | 3-4 | 3 | 1 |

### Anwendungsbeispiel 2

| | STP 1 (Vergleich) | STP 2 (erfindungsgemäß) | STP 3 (erfindungsgemäß) |
|---|---|---|---|
| DOTP | 20,00 | 18,16 | 1,59 |
| Weichmacher Mischung | - | 2,03 | 20,37 |
| Polymer ST 61 | 30,00 | 30,00 | 30,00 |
| Aerosil R 202 | 3,00 | 3,00 | 3,00 |
| Omyalite 90 T | 45,50 | 45,31 | 43,54 |
| Dynasylan GLYMO | 1,00 | 1,00 | 1,00 |
| Metatin 740 | 0,50 | 0,50 | 0,50 |
| | | | |
| Zugfestigkeit [Mpa] | 3,38 | 3,48 | 3,28 |
| Bruchdehnung [%] | 228,00 | 264,00 | 244,00 |
| Fließpunkt [Pa] | 4.502 | 3.783 | 2.984 |
| Hautbildezeit [min] | 31 | 32 | 31 |
| Glättbarkeit | 4 | 3 | 1 |

### Anwendungsbeispiel 3

| | PU 1 (Vergleich) | PU 2 (erfindungsgemäß) | PU 3 (erfindungsgemäß) |
|---|---|---|---|
| DOTP | 20,00 | 18,16 | 1,59 |
| Weichmacher Mischung | - | 2,03 | 20,37 |
| PP 600 | 30,00 | 30,00 | 30,00 |
| Aerosil R 202 | 3,00 | 3,00 | 3,00 |
| Omyacarb 2 SV | 46,45 | 46,26 | 44,49 |
| Dynasylan GLYMO | 0,50 | 0,50 | 0,50 |
| Lupranat N 106 DMDEE | 0,05 | 0,05 | 0,05 |
| | | | |
| Zugfestigkeit [Mpa] | 2,25 | 2,26 | 2,05 |
| Bruchdehnung [%] | 809 | 775 | 787 |
| Fließpunkt [Pa] | 917 | 709 | 667 |
| Hautbildezeit [min] | 63 | 62 | 59 |
| Glättbarkeit | 4 | 3 | 2 |

Wie den Beispielen zu entnehmen ist, kann durch die Zugabe von 2-Ethylhexyl-methyl-terephthalat der Fließpunkt gegenüber der Verwendung von herkömmlichen Terephthalaten in Kleb- und Dichtstoff erniedrigt und die Glättbarkeit verbessert werden.

### Legende:

PP 600: Polyurethan Bindemittel der BASF SE
Polymer ST 61: silanterminiertes Polyurethanbindemittel der Hanse Chemie AG
DOTP: Dioctyl terephthalat (Bis(2-ethylhexyl)terephthalat)
Omyacarb 2 SV: gemahlene Kreide der Omya Inc.
Omyalite 90 T: Hochreines oberflächenbehandeltes Calciumcarbonat der Omya Inc.
Aerosil R 202: pyrogene Kieselsäure der Evonik Degussa GmbH
Dynasylan GLYMO: 3-Glycidyloxypropyltrimethoxysilan der Evonik Degussa GmbH Lupranat N 106 DMDEE: 2,2'-Dimorpholinyldiethylether der BASF SE
Metatin 740: Dibutylzinnketonat der Acima AG
Acronal S 410: Acrylat Dispersion der BASF SE
Pigmentverteiler NL: Polyacrylsäure Natriumsalz in Wasser der BASF SE
Lutensol AO 89: Fettalkoholethoxylat, in Wasser der BASF SE
Kronos 2056: Titandioxid der KRONOS INTERNATIONAL, Inc.
Socal U 1 S2: Fällungskreide ultrafein gecoatet der Solvay S.A.

### Methoden:

Die Zugprüfung wurde in Anlehnung an die DIN 53504 durchgeführt.

Der Fließpunkt wurde im Oszillationsmodus bei 23 °C mit einem Physica MCR 301 Rheometer der Anton Paar GmbH unter folgenden Bedingungen bestimmt:
Deformation: 0,01-100 %
Kreisfrequenz: 10 1/s

Die Hautbildezeit wurde durch Auflegen eines Metallstiftes auf die Materialoberfläche bestimmt. Sie ist erreicht, wenn an der Spitze des Metallstiftes kein Material mehr haftet.

Die Glättbarkeit wird durch das Glätten einer Kleb- oder Dichtstoffraupe bestimmt. Hierzu wird das Material mit einem Glättmittel besprüht und anschließend 10 mal mit dem Finger über die Raupe gestrichen, bis eine ebene Schicht entsteht. Es wird das optische Ergebnis und das Streichverhalten als Glättbarkeit zusammengefasst und mit einem Schulnotensystem von 1 bis 6 bewertet, wobei 1 für sehr gut und 6 für ungenügend steht.

## Patentansprüche

1. Kleb- oder Dichtstoff enthaltend, bezogen auf den gesamten Kleb- oder Dichtstoff.
(A) 10 bis 90 Gew.-% mindestens einer Verbindung ausgewählt aus der Gruppe der Polyurethane, Polyharnstoffe, Polyacrylate, Polysulfide, silylierten Polyurethane, silylierten Polyharnstoffe, silylierten Polyether, silylierten Polysulfide und silyl-terminierten Acrylate und
(B) 0,32 bis 40 Gew.-% 2-Ethylhexyl-methyl-terephthalat, 0 bis 80 Gew.-% Füllstoffe, 0 bis 10 Gew.-% Rheologiemodifizierer und bis zu 40 Gew.-% mindestens eines weiteren Weichmachers, wobei dieser mindestens eine weitere Weichmacher Di-2-ethylhexyltherephthalat umfasst.

2. Kleb- oder Dichtstoff nach Anspruch 1, **dadurch gekennzeichnet, dass** dieser als weitere Komponenten mindestens eine aus der Reihe Hilfs- und Zusatzstoffe, Dispergiermittel, Filmbildehilfsmittel ,Pigmente, Rheologiehilfsmittel, Wasserfänger, Haftvermittler, Katalysatoren, Licht- und Alterungsschutzmittel, Flammschutzmittel und/oder Biozide enthält.

3. Kleb- oder Dichtstoff nach einem der Ansprüche 1 bis 2, **dadurch gekennzeichnet, dass** es sich um ein Einkomponentensystem handelt.

4. Kleb- oder Dichtstoff nach einem der Ansprüche 1 bis 3, **dadurch gekennzeichnet, dass** es sich um ein Zweikomponentensystem handelt.

5. Verfahren zur Herstellung eines Kleb- oder Dichtstoffes nach einem der Ansprüche 1 bis 4, **dadurch gekennzeichnet, dass**
a) Komponente (A), Komponente (B) und mindestens eine Verbindung aus der Reihe Füllstoff, Weichmacher, Thixotropiermittel, Antioxidans, und UV-Absorber vorgelegt werden,
b) mindestens eine Verbindung aus der Reihe Lösungsmittel und Haftvermittler zugesetzt wird,
und die Komponenten homogen gemischt werden.

6. Verfahren zur Herstellung eines Kleb- oder Dichtstoffes nach Anspruch 5, **dadurch gekennzeichnet, dass** das Verfahren diskontinuierlich durchgeführt wird.

7. Verfahren zur Herstellung eines Kleb- oder Dichtstoffes nach Anspruch 5, **dadurch gekennzeichnet, dass** das Verfahren kontinuierlich durchgeführt wird.

8. Verwendung des Kleb- oder Dichtstoffes nach einem der Ansprüche 1 bis 4, zur Herstellung von stoffschlüssigen Verbindungen zwischen Fügeteilen.

9. Verwendung des Kleb- oder Dichtstoffes nach Anspruch 8, zur Herstellung von stoffschlüssigen Verbindungen zwischen Fügeteilen aus Stein, Beton, Mörtel, Glas, Metall, Keramik, Kunststoff und/oder Holz.

10. Verwendung des Kleb- oder Dichtstoffes nach einem der Ansprüche 8 oder 9, **dadurch gekennzeichnet, dass** es sich bei den Fügeteilen zum einen um eine Oberfläche und zum anderen um einen Teppich-Belag, einen PVC-Belag, ein Laminat, einen Gummi-Belag, einen Kork-Belag, einen Linoleum-Belag, einen Holz-Belag oder Fließen handelt.

11. Verwendung des Kleb- oder Dichtstoffes nach einem der Ansprüche 8 oder 9, **dadurch gekennzeichnet, dass** es sich bei der stoffschlüssigen Verbindung um eine Hochbaufuge, eine Dehnfuge, eine Bodenfuge, Fassadenfuge, Gebäudetrennfugen, Anschlussfugen, Verglasung, Fensterverglasung, Structural Glazing, Dachverglasung, Fensterversiegelung oder eine Dichtfuge im Sanitärbereich handelt.

12. Verwendung des Kleb- oder Dichtstoffes nach einem der Ansprüche 8 oder 9, **dadurch gekennzeichnet, dass** es sich bei den Fügeteilen um Teile im Elektro-, Maschinen-, Auto-, LKW-, Wohnwagen-, Zug-, Trailer-, Flugzeug-, Schiff-, und Gleisbau handelt.

## Claims

1. An adhesive or sealant comprising, based on the overall adhesive or sealant,
(A) 10 to 90% by weight of at least one compound selected from the group consisting of polyurethanes, polyureas, polyacrylates, polysulphides, silylated polyurethanes, silylated polyureas, silylated polyethers, silylated polysulphides and silyl-terminated acrylates, and
(B) 0.32 to 40% by weight of 2-ethylhexyl methyl terephthalate, 0 to 80% by weight of fillers, 0 to 10% by weight of rheology modifiers and up to 40% by weight of at least one further plasticizer, said at least one further plasticizer comprising di-2-ethylhexyl terephthalate.

2. The adhesive or sealant according to claim 1, wherein it comprises, as further components, at least one component from the series consisting of auxiliaries and additives, dispersants, film-forming assistants, pigments, rheological assistants, water scavengers, adhesion promoters, catalysts, light stabilizers, ageing inhibitors, flame retardants and/or biocides.

3. The adhesive or sealant according to either of claims 1 and 2, wherein it is a one-component system.

4. The adhesive or sealant according to any of claims 1 to 3, wherein it is a two-component system.

5. A process for preparing an adhesive or sealant according to any of claims 1 to 4, wherein
a) component (A), component (B) and at least one compound from the series consisting of filler, plasticizer, thixotropic agent, antioxidant and UV absorber is introduced,
b) at least one compound from the series consisting of solvent and adhesion promoter is added,
and the components are mixed homogeneously.

6. The process for preparing an adhesive or sealant according to claim 5, wherein the process is carried out discontinuously.

7. The process for preparing an adhesive or sealant according to claim 5, wherein the process is carried out continuously.

8. The use of the adhesive or sealant according to any of claims 1 to 4 for producing material bonds between parts to be joined.

9. The use of the adhesive or sealant according to claim 8, for producing material bonds between parts to be joined made of stone, concrete, mortar, glass, metal, ceramic, plastic and/or wood.

10. The use of the adhesive or sealant according to either of claims 8 and 9, wherein one of the parts to be joined is a surface and the other is a carpet covering, a PVC covering, a laminate, a rubber covering, a cork covering, a linoleum covering, a wood covering or tiles.

11. The use of the adhesive or sealant according to either of claims 8 and 9, wherein the material bond is a construction joint, an expansion joint, a flooring joint, a façade joint, building partition joints, flashing joints, glazing, window glazing, structural glazing, roof glazing, window sealing or a sealed joint in the sanitary sector.

12. The use of the adhesive or sealant according to either of claims 8 and 9, wherein the parts to be joined are parts in electrical, mechanical, automotive, lorry, caravan, train, trailer, aircraft, watercraft and railway construction.

## Revendications

1. Matière adhésive ou d'étanchéité contenant, par rapport à l'ensemble de la matière adhésive ou d'étanchéité
(A) 10 à 90 % en poids d'au moins un composé choisi dans le groupe des polyuréthanes, polyurées, polyacrylates, polysulfures, polyuréthanes silylés, polyurées silylées, polyéthers silylés, polysulfures silylés et acrylates à terminaison silyle et
(B) 0,32 à 40 % en poids de téréphtalate de 2-éthyl-hexyle et de méthyle, 0 à 80 % en poids de charges, 0 à 10 % en poids de modificateurs de rhéologie et jusqu'à 40 % en poids d'au moins un autre plastifiant, ce dit au moins un autre plastifiant comprenant le téréphtalate de di-2-éthylhexyle.

2. Matière adhésive ou d'étanchéité selon la revendication 1, **caractérisée en ce qu'**elle contient comme autres composants au moins un de la série des adjuvants et additifs, dispersants, adjuvants filmogènes, pigments, adjuvants de rhéologie, agents déshydratants, promoteurs d'adhérence, catalyseurs, photoprotecteurs et agents antivieillissement, agents ignifuges et/ou biocides.

3. Matière adhésive ou d'étanchéité selon l'une quelconque des revendications 1 et 2, **caractérisée en ce qu'**il s'agit d'un système monocomposant.

4. Matière adhésive ou d'étanchéité selon l'une quelconque des revendications 1 à 3, **caractérisée en ce qu'**il s'agit d'un système bicomposant.

5. Procédé pour la production d'une matière adhésive ou d'étanchéité selon l'une quelconque des revendications 1 à 4, **caractérisé en ce que**
a) on dispose au préalable le composant (A), le composant (B) et au moins un composé choisi dans la série constituée par une charge, un plastifiant, un agent de thixotropie, un antioxydant et un absorbeur UV,
b) on ajoute au moins un composé choisi dans la série constituée par des solvants et des promoteurs d'adhérence,
et on mélange de façon homogène les composants.

6. Procédé pour la production d'une matière adhésive ou d'étanchéité selon la revendication 5 **caractérisé en ce que** le procédé est effectué en mode discontinu.

7. Procédé pour la production d'une matière adhésive ou d'étanchéité selon la revendication 5, **caractérisé en ce que** le procédé est effectué en continu.

8. Utilisation de la matière adhésive ou d'étanchéité selon l'une quelconque des revendications 1 à 4, pour la production d'assemblages réalisés par adhérence entre des pièces à joindre.

9. Utilisation de la matière adhésive ou d'étanchéité selon la revendication 8, pour la production d'assemblages réalisés par adhérence entre des pièces à joindre en pierre, béton, mortier, verre, métal, céramique, matière plastique et/ou bois.

10. Utilisation de la matière adhésive ou d'étanchéité selon l'une quelconque des revendications 8 et 9, **caractérisée en ce que** pour ce qui concerne les pièces à joindre il s'agit d'une part d'une surface et d'autre part d'une moquette, d'un revêtement en PVC, d'un stratifié, d'un revêtement en caoutchouc, d'un revêtement en liège, d'un revêtement en linoléum, d'un revêtement en bois ou de carreaux.

11. Utilisation de la matière adhésive ou d'étanchéité selon l'une quelconque des revendications 8 et 9, **caractérisée en ce que** pour ce qui est de l'assemblage par adhérence il s'agit d'un joint de bâtiment, d'un joint de dilatation, d'un joint de sol, d'un joint de façade, de joints de séparation de bâtiment, de joints de raccordement, d'un vitrage, d'un vitrage de fenêtre, d'un structural glazing, d'un vitrage en toiture, d'un scellement de fenêtre ou d'un joint d'étanchéité dans le domaine sanitaire.

12. Utilisation de la matière adhésive ou d'étanchéité selon l'une quelconque des revendications 8 et 9, **caractérisée en ce que** pour ce qui concerne les pièces à joindre il s'agit de pièces dans la construction électrique, de machines, d'automobiles, de camions, d'autocaravanes, de trains, de remorques, d'aéronefs, de bateaux et de voies ferrées.
